(19) Europäisches Patentamt
European Patent Office
Office européen des brevets

(11) EP 2 246 818 A1

(12) **EUROPEAN PATENT APPLICATION**
published in accordance with Art. 153(4) EPC

(43) Date of publication:
**03.11.2010 Bulletin 2010/44**

(21) Application number: **08871357.3**

(22) Date of filing: **17.12.2008**

(51) Int Cl.:
***G06T 1/00*** *(2006.01)* ***H04N 1/46*** *(2006.01)*
***H04N 1/60*** *(2006.01)*

(86) International application number:
**PCT/JP2008/003808**

(87) International publication number:
**WO 2009/093294 (30.07.2009 Gazette 2009/31)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **24.01.2008 JP 2008013746**

(71) Applicant: **Panasonic Corporation**
**Kadoma-shi**
**Osaka 571-8501 (JP)**

(72) Inventors:
- **SAITO, Natsuki**
  **Osaka-shi, Osaka 540-6207 (JP)**
- **MORI, Mitsuhiro**
  **Osaka-shi, Osaka 540-6207 (JP)**

(74) Representative: **Unland, Jochen Hermann**
**Eisenführ, Speiser & Partner**
**P.O. Box 10 60 78**
**28060 Bremen (DE)**

# (54) IMAGE SIGNAL PROCESSING DEVICE AND IMAGE SIGNAL PROCESSING PROGRAM

(57) There is provided an image signal processing device for receiving an image signal using a first color signal, and converting the image signal to image data using a second color signal to output the image data, the image signal processing device including an image signal input unit for receiving the image signal using the first color signal; a clip determination unit for determining whether or not the first color signal is a domain end of the relevant signal or a neighboring color of a specific color gamut end; a distance calculation unit for calculating a distance to a closest pixel that is not clipped with respect to a pixel determined as the signal domain end or the neighboring color of the specific color gamut end; an adjustment amount determination unit for determining a color signal adjustment amount with respect to a color signal in each pixel; a color signal adjustment unit for adjusting the color signal in each pixel by the color signal adjustment amount to obtain the second color signal; and an image signal output unit for outputting the image signal using the second color signal.

*Fig. 1*

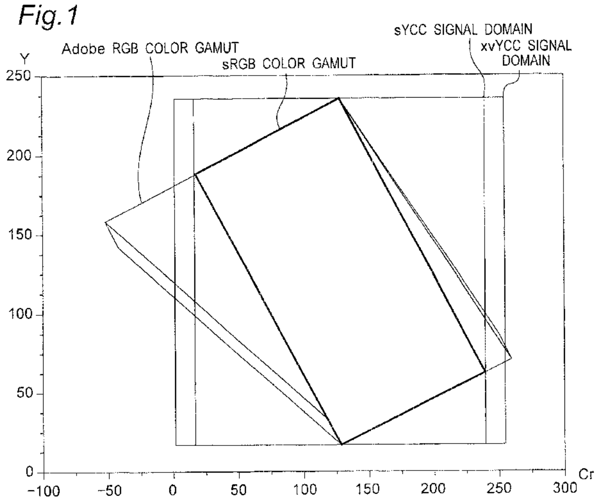


EP 2 246 818 A1

## Description

BACKGROUND

1. Technical Field

This present application claims priority on Japanese Patent Application No. 2008-13746 filed in Japan on Jan. 24, 2008, the entire contents of which are incorporated herein by references.

The present invention relates to an image signal processing device and an image signal processing program. In particular, the present invention relates to an image signal processing device and an image signal processing program for compensating change in color due to clipping and the like of the signal in the recording process of the image signal in an image output device having a color gamut exceeding a domain of the image signal, and effectively using the wide color gamut of the image output device.

2. Description of the Related Art

Conventionally, a method using a standard color space such as sRGB and sYCC is widely used to ensure color reproducibility between different image input/output processing devices such as camera and display, or display and printer.

In recent years, a device which handles a color gamut exceeding sRGB and sYCC exists in both the input device such as a camera and a scanner, and the output device such as a display and a printer. A method of ensuring compatibility with the sRGB and the sYCC used in the related art while effectively using the wide color gamut of the device has been proposed, as described in Japanese Patent Publication No. 3800427.

In the method proposed in patent document 1, the color signal of wide color gamut that becomes upper compatible of the conventional sYCC standard is transmitted by expanding a $\gamma$ curve from the sYCC standard primarily using three primary colors having the same chromaticity coordinate as the sYCC, and using the regions of Cb, Cr, which are not used in the sYCC standard.

In the field of printers, the RGB value of the color image displayed on the display is converted to the ink amount of CMYK etc., and then printed. In this case, an appropriate mapping is generally performed on the portion where the color gamut does not overlap while accurately reproducing the color gamut that can be commonly handled by the display and the printer. For instance, if the RGB signal exceeding the color gamut of the printer is input, mapping is performed to the closest point on the color gamut surface of the printer in a L*a*b* color space to perform a color conversion process such that a difference between a display color of the display and an output color from the printer becomes a minimum, as described in Japanese Laid-Open Patent Publication No. 2006-33246.

Disclosed is a method of performing a wide color gamut display effectively using the color gamut of the display by linearly expanding the luminance and the color saturation in the range not exceeding the color gamut of the display while maintaining a hue of the input color signal when the color gamut of the display is narrower than the color gamut of the printer, as described in Japanese Laid-Open Patent Publication No. 2003-153027.

Patent document 1:

SUMMARY OF THE INVENTION

However, since the color signal is converted through processes common to all the pixels in the conventional method, characteristics in a spatial direction are crushed even if an error for every pixel is a minimum, and an image may become unnatural.

For instance, if the color gamut of Adobe RGB is converted to signals of Y, Cb, and Cr through the method described in patent document 1, red, green, and cyan having high degree of saturation does not fall within the domain of the color difference signal (Fig. 1). In such a case, a color saturation of the original color signal is lowered so as to fall within the domain of the color difference signal, or the color difference signal is simply clipped in the method described in patent document 1. However, in such method, only the color saturation differs at the same hue and the same luminance, and the gradation that goes outside the domain of the color difference signal becomes a single color after the conversion. For instance, a gradation region where the color saturation becomes greater towards the center as in Figs. 2A and 2B is clipped to all one color over the entire region, which is outside the domain, as shown in Figs. 3A and 3B. The mapping process to a color gamut surface represented by Japanese Patent Laid-open Publication No. 2006-33246 also has a similar problem.

When mapping to some kind of signal domain surface or color gamut surface is performed by the compression process of the color gamut, the characteristics in the spatial direction such as the original gradation cannot be restored

from the single color, and conversion to the single color using the color of the color gamut surface of the output device is merely performed in the color gamut expansion method of the related art represented by Japanese Patent Laid-open Publication No. 2003-153027. In the example of Fig. 3B, for example, the original gradation shown in Fig. 4C cannot be restored and only a uniform value is added as a whole, as shown in Fig. 4B, when the color gamut expansion is performed on the all-one-color region that is outside the domain. In particular, the generation of such all-one-color portion has a large adverse affect on a subjective image quality in the display of a natural image.

To alleviate such drawback, a method of compressing the color gamut to a value of a constant range close to the signal domain or the color gamut surface rather than simple clipping is known. In such method, however, the effect cannot be recognized unless the range of value of the compressing destination is relatively large, but color reproducibility with the device that does not assume such color gamut compression process is affected as the range of value of the compressing destination becomes greater.

As shown in Fig. 5, for example, conversion of the color gamut of the Adobe RGB to the signal of Y, Cb, Cr through the method described in patent document 1 will be described. In this case, the gradation using the color of (region 201) is compressed to (region 202) when compression of the color gamut is performed with a width of four (region 202) provided towards the inside from the domain surface of the color difference signal. Thus, the Cr is merely quantized to 4 values, which becomes a cause of false contour. This problem can be solved by providing a greater width (region 202) of the value of the compressing destination, but the region where the color reproducibility is affected is enlarged when displayed on the display device that does not assume such process.

It is an object of the present invention to provide an image signal processing device and an image signal processing program capable of effectively using the entire gamut of the output device while taking clipping into consideration even when receiving an input of an image signal containing a color signal having a possibility of being clipped.

To solve the above problems, an image signal processing device according to the present invention relates to an image signal processing device for receiving an image signal using a first color signal, and converting the image signal to image data using a second color signal to output the image data, the image signal processing device including:

an image signal input unit for receiving the image signal using the first color signal for every pixel;
a clip determination unit for determining whether or not the first color signal is a color signal of an end of a domain of a color space defining the first color signal or a neighboring color of a specific color gamut end existing within the domain of the color space;
a distance calculation unit for calculating a distance to a closest pixel determined as not the end of the domain of the color space or the neighboring color of the specific color gamut end with respect to a pixel determined as the color signal of the end of the domain of the color space or the neighboring color of the specific color gamut end;
an adjustment amount determination unit for determining a color signal adjustment amount with respect to a color signal in each pixel based on the outputs of the clip determination unit and the distance calculation unit;
a color signal adjustment unit for adjusting the color signal in each pixel by the color signal adjustment amount based on the output of the color signal adjustment amount determination unit to obtain the second color signal; and
an image signal output unit for outputting an image signal using the second color signal.

The image signal using the first color signal is subjected to conversion of a color space from a color signal defined by a color space different from the color signal defining the first color signal, the first color signal converted from a color signal of a color gamut that cannot be expressed with the color space defining the first color signal being trimmed.

The different color space before conversion to the first color signal may be RAW RGB or the like based on a primary color chromaticity coordinate of a specific imaging device other than Adobe RGB, wide gamut RGB, DCI standard, or NTSC.

The image signal input unit may receive an input of metadata related to trimming in the first color signal of the image signal along with the image signal. In this case, the adjustment amount determination unit prepares plural types of functions for obtaining the color signal adjustment amount of the color signal in advance, selects the function based on the metadata and also selects a parameter value of the selected function, and determines the color signal adjustment amount using the selected function.

The color signal adjustment unit may superimpose an appropriate noise on the second color signal after processing so that an interior of a region to be processed does not become a very smooth gradation or superimpose noise on the color signal adjustment amount in advance and then perform a color signal adjustment process.

A color space conversion unit for converting a color space from the first color signal defined by the first color space to the third color signal defined by a third color space different from the first color space may be arranged. In this case, the adjustment amount determination unit determines the color signal adjustment amount with respect to the third color signal in each pixel; the color signal adjustment unit adjusts the third color signal in each pixel by the color signal adjustment amount to obtain the second color signal; and the image signal output unit outputs the second color signal.

A color space conversion unit for converting a color space from the second color signal to the third color signal

defined by a third color space different from the color space defining the second color signal may be arranged. In this case, the image signal output unit outputs an image signal using the third color signal.

The first color space may be xvYCC, and the third color space may be RGB.

Another configuration of the image signal processing device according to the present invention relates to an image signal processing device for receiving an image signal using a first color signal, and converting the image signal to image data using a second color signal to output the image data, the image signal processing device including:

an image signal input unit for receiving the image signal using the first color signal for every pixel;
a characteristic extracting unit for extracting a characteristic image signal having a signal distance vector from an end of a domain of a color space defining the first color signal as an element from the image signal;
a dictionary searching unit for obtaining a color adjustment amount corresponding to the characteristic image signal from a color signal adjustment amount dictionary in which the characteristic image signal and a color signal adjustment amount for restoring an image before clipping are recorded in association with each other;
a color signal adjustment unit for adjusting the color signal in each pixel by the color signal adjustment amount to obtain the second color signal; and
an image signal output unit for outputting the image signal using the second color signal.

An image signal processing method according to the present invention relates to an image signal processing computer program for causing a computer to execute an image signal processing method of receiving an image signal using a first color signal, and converting the image signal to image data using a second color signal to output the image data, the image signal processing method including:

an image signal input step of receiving the image signal using the first color signal for every pixel;
a clip determination step of determining whether or not the first color signal is a color signal of an end of a domain of a color space defining the first color signal or a neighboring color of a specific color gamut end existing within the domain of the color space for each pixel;
a distance calculation step of calculating a distance to a closest pixel determined as not the end of the domain of the color space or the neighboring color of the specific color gamut end with respect to a pixel determined as the color signal of the end of the domain of the color space or the neighboring color of the specific color gamut end by the clip determination step;
an adjustment amount determination step of determining a color signal adjustment amount with respect to a color signal in each pixel based on the distance to the closest pixel;
a color signal adjustment step of adjusting the color signal in each pixel by the color signal adjustment amount to obtain the second color signal; and
an image signal output step of outputting the image signal using the second color signal.

The image signal using the first color signal is subjected to conversion from a color signal defined by a color space different from the first color space, the first color signal converted from a color signal of a color gamut that cannot be expressed with the color space defining the first color signal being trimmed.

The image signal input step may include receiving an input of metadata related to trimming in the first color signal of the image signal along with the image signal; and
the adjustment amount determination step may include preparing plural types of functions for obtaining the color signal adjustment amount of the color signal in advance, selecting the function based on the metadata and also selecting a parameter value of the selected function, and determining the color signal adjustment amount using the selected function.

The color signal adjustment steps may include superimposing an appropriate noise on the second color signal after processing so that an interior of a region to be processed does not become a very smooth gradation. or superimposing noise on the color signal adjustment amount in advance and then performing a color signal adjustment process.

A color space conversion step of converting a color space from the first color signal defined by the first color space to the third color signal defined by a third color space different from the first color space may be further arranged. In this case, the adjustment amount determination step includes determining the color signal adjustment amount with respect to the third color signal in each pixel; the color signal adjustment step includes adjusting the third color signal in each pixel by the color signal adjustment amount to obtain the third color signal; and the image signal output step includes outputting the third color signal.

A color space conversion step of converting a color space from the second color signal to the third color signal defined by a third color space different from the color space defining the second color signal may be further arranged. In this case, the image signal output step includes outputting an image signal using the third color signal.

Another configuration of the image signal processing program according to the present invention relates to an image signal processing computer program for causing a computer to execute an image signal processing method of

receiving an image signal using a first color signal, and converting the image signal to image data using a second color signal to output the image data, the image signal processing method including:

an image signal input step for receiving the image signal using the first color signal for every pixel;
a characteristic extracting step of extracting a characteristic image signal having a signal distance vector from an end of a domain of a color space defining the first color signal as an element from the image signal;
a dictionary searching step of obtaining a color adjustment amount corresponding to the characteristic image signal from a color signal adjustment amount dictionary in which the characteristic image signal and a color signal adjustment amount for restoring an image before clipping are recorded in association with each other;
a color signal adjustment step of adjusting the color signal in each pixel by the color signal adjustment amount to obtain the second color signal; and
an image signal output step of outputting the image signal using the second color signal.

According to the image signal processing device and the image signal processing program of the present invention, the entire gamut of the display can be effectively used in view of clipping while substantially maintaining color reproducibility even when receiving an image signal using a color signal having a possibility of being clipped.
The image signal processing device and the image signal processing program according to the present invention assume a simple clipping or a color gamut compression to a very narrow range of values. First, a region where only the domain of the color gamut of the input signal or the color near the specific color gamut surface continues is detected. The color conversion is performed such that the color at the exterior and the contour of the detected region is maintained, and the color approaches the color of the color gamut surface of the output device as the distance is farther away from the contour of the region in the interior of the region. The unnatural color expression due to clipping and the like is thereby resolved.

BRIEF DESCRIPTION OF THE DRAWINGS

The present invention will become readily understood from the following description of preferred embodiments thereof made with reference to the accompanying drawings, in which like parts are designated by like reference numeral and in which:

Fig. 1 is a schematic view comparing a domain of plural color spaces on an YCr plane;
Fig. 2A is an example of an image having a gradation towards the center using an Adobe RGB color gamut, and Fig. 2B is a schematic view showing an extent of exceeding the domain of Cr in an xvYCC color space towards the center of Fig. 2A;
Fig. 3A is a schematic view of an image in which Fig. 2A is converted from the Adobe RGB color gamut to the xvYCC color space, and Fig. 3B is a schematic view, corresponding to Fig. 2B, showing a state in which a Cr value is clipped to the xvYCC domain;
Fig. 4A is a schematic view when correction is performed on the region subjected to clipping of Fig. 3A through a conventional method, Fig.4B is a schematic view showing a uniform correction of the Cr value in the conventional method, and Fig. 4C is a schematic view showing the Cr value before the clipping;
Fig. 5 is a schematic view showing color gamut compression of the Adobe RGB color gamut to the xvYCC color space;
Fig. 6 is a block diagram showing a configuration of an image signal processing device according to the first embodiment of the present invention;
Fig. 7 is a flowchart of the image signal processing program according to the first embodiment of the present invention;
Fig. 8A is a more detailed flowchart of the image signal processing program of Fig. 7;
Fig. 8B is a flowchart following the flowchart of Fig. 8A;
Fig. 9A is a schematic view showing an example of a distance parameter with respect to each pixel in the image buffer memory;
Fig. 9B is a schematic view showing a result of performing a distance parameter updating loop once;
Fig. 9C is a schematic view showing a result of performing the distance parameter updating loop twice;
Fig. 9D is a schematic view showing a result of performing the distance parameter updating loop three times;
Fig. 10 is a schematic view showing one example of a function f of the distance parameter and a color signal adjustment amount;
Fig. 11 is a schematic view showing a relationship between the domain of the xvYCC color space, which is the input color signal, and the sRGB color gamut and the color gamut of the output device;
Fig. 12A is a schematic view showing a clip flag for every pixel;
Fig. 12B is a schematic view showing a distance to the pixel where the clip flag is 0 from the pixel where the clip flag is 1 having a coordinate (6, V) of Fig. 12A;

Fig. 13 is a schematic view showing an example in which a mistaken color correction is performed in the correction in the conventional method when gradation towards the center of the image does not exist;
Fig. 14 is a schematic view showing another example of the function f of the distance parameter and the color signal adjustment amount;
Fig. 15 is a block diagram showing a configuration of an image signal processing device according to a second embodiment of the present invention.
Fig. 16 is a flowchart of an image signal processing program according to the second embodiment of the present invention;
Fig. 17 is a block diagram showing a configuration of an image signal processing device according to a third embodiment of the present invention;
Fig. 18 is a flowchart of an image signal processing program according to the third embodiment of the present invention;
Fig. 19 is a flowchart showing the details of step S42 for determining the color signal adjustment amount of Fig. 18;
Fig. 20 is a block diagram showing a configuration of an image signal processing device according to a fifth embodiment of the present invention;
Fig. 21 is a flowchart of an image signal processing program according to the fifth embodiment of the present invention;
Fig. 22 is a block diagram showing a configuration of a learning device of a color signal adjustment amount dictionary; and
Fig. 23 is a flowchart of a learning program of the color signal adjustment amount dictionary.

DESCRIPTION OF SYMBOLS

| | |
|---|---|
| 11 10, 10a, 10b, 10c | image signal processing device image signal input unit |
| 12 | buffer memory |
| 13 | clip determination unit |
| 14 | distance calculation unit |
| 15 | adjustment amount determination unit |
| 16 | color signal adjustment unit |
| 17 | image signal output unit |
| 18 | color space conversion unit |
| 20 | adjustment amount calculating section |
| 21 | characteristic extracting unit |
| 22 | color signal adjustment amount dictionary |
| 23 | dictionary searching unit |
| 30 | color signal adjustment amount dictionary learning device |
| 31 | xvYCC conversion unit |
| 32 | characteristic extracting unit |
| 33 | learning unit |

BEST MODE FOR CARRYING OUT THE INVENTION

An image signal processing device and an image signal processing program according to the embodiments of the present invention will be described below using the accompanied drawings. The same reference numerals are denoted for substantially the same members throughout the drawings.

(First Embodiment)

Fig. 6 is a block diagram showing a configuration of an image signal processing device 10 according to the first embodiment of the present invention. The image processing device 10 includes an image signal input unit 11, an image buffer memory 12, a clip determination unit 13, a distance calculation unit 14, an adjustment amount determination unit 15, a color signal adjustment unit 16, an image signal output unit 17, and a color space conversion unit 18. The image signal input unit 11 receives the xvYCC signal, color space of which is converted through a color gamut compression process such as clipping from a wide color gamut color signal (e.g., Adobe RGB signal shown in Fig. 1) in a digital camera and the like. The image buffer memory 12 holds still image data. The clip determination unit 13 determines whether the xvYCC signal input to the image signal input unit 11 is a neighboring color of the domain end of an xvYCC color gamut or the domain end of an Adobe RGB color gamut. In this case, the neighboring color of the domain end of

the xvYCC color gamut is determined to have a possibility of being subjected to clipping by the conversion from the Adobe RGB to the xvYCC, and the neighboring color of the Adobe RGB color gamut end is determined to have a possibility of being subjected to clipping by the conversion from the RAW RGB or the like of an imaging device to the Adobe RGB, and is the target of color gamut expansion process. The distance calculation unit 14 calculates the distance with the closest pixel determined as not the neighboring color of the domain end of the xvYCC color gamut or the domain end of the Adobe RGB color gamut by the clip determination unit 13 with respect to the pixel determined as the neighboring color of the domain end of the xvYCC color gamut or the domain end of the Adobe RGB color gamut by the clip determination unit 13. The adjustment amount determination unit 15 determines a color signal adjustment amount of the xvYCC color signal based on the outputs of the clip determination unit 13 and the distance calculation unit 14. Furthermore, the color signal adjustment unit 16 adjusts the xvYCC color signal by the color signal adjustment amount, and obtains the adjusted xvYCC color signal. In this case, the color signal adjustment amount is made such that it does not deviate from the domain, that is, it does not become the color non-displayable on the display after the subsequent conversion to the RGB color signal. The color signal adjustment unit 16 adjusts the xvYCC color signal based on the output of the adjustment amount determination unit 15. The color space conversion unit 18 converts the color space from the xvYCC color signal to the RGB signal to be displayed on the display. The image signal output unit 17 outputs the obtained RGB color signal.

The xvYCC signal corresponds to a YCbCr signal value based on Japanese Patent Publication No. 3800427. As shown in Fig. 1, both an sYCC color space and a xvYCC color space are represented by a YCbCr signal value. The xvYCC color space is obtained by expanding the sYCC color space for a Cb value and a Cr value. The Adobe RGB color space of wide color gamut is defined by parameters different from sYCC, xvYCC, and the like. Thus, when the color gamut of the Adobe RGB is represented in a Cr-Y plane, it does not fall within either an sYCC color gamut or the xvYCC color gamut as shown in Fig. 1, and does not coincide with the sRGB color gamut.

Fig. 7 is a flowchart of the image signal processing program executed by a computer according to the first embodiment of the present invention.

(a) An image signal using a first color signal (xvYCC color signal) is received for every pixel (S01).
(b) Whether or not the first color signal (xvYCC color signal) is the neighboring color of the end of the domain of the color space (xvYCC color space) or of a specific color gamut end is determined (S02).
(c) A distance to the closest pixel determined as not the neighboring color of the end of the domain of the color space and the specific color gamut end is calculated (S03).
(d) The color signal adjustment amount with respect to the first color signal in each pixel is calculated based on the distance to the closest pixel (S04).
(e) The first color signal in each pixel is adjusted by the color signal adjustment amount to obtain the second color signal (S05).
(f) The color space is converted from the second color signal to the third color signal defined by the third color space (S06).
(g) The image signal using the third color signal is output (S07).

Fig. 8A and Fig. 8B are more detailed flowcharts of the image signal processing program of Fig. 7. Such detailed flowcharts will be described below.

(a) First, all the received xvYCC input color signals are stored in the image buffer memory 12 for one screen (S11). The storage of the xvYCC color signal for one screen is thereby completed.
(b) Clip determination is determined by the clip determination unit 13 (S13) on all the pixels (S12), and a clip flag is set to the pixel having a possibility of being subjected to clipping (e.g. 1) and a distance parameter of the pixel is set to -1 (S14). The clip flag is set to 0 for the pixel that does not have the possibility of being subjected to clipping, and the distance parameter of the pixel is set to 0 (S15).
(c) After the process of the clip determination is completed for all the pixels, the flag for escape determination from the loop of S17 is set to 1 (S16). An example of the distance parameter with respect to each pixel in the image buffer memory 12 at this time point is shown in Fig. 9A. A distance parameter value of the pixel having the possibility of being subjected to clipping is -1, and the distance parameter value of other pixels is 0. A circle is given to the pixel having the distance parameter value -1.
(d) The loop of S17 corresponds to the process performed by the distance calculation unit 14. First, the clip flag of the pixel is checked (S18) for all the pixels (S17).
(e) Whether the distance parameter of the pixel is already updated and is greater than 0 is examined if the clip is set (S19).
(f) Whether a maximum of eight pixels adjacent to the relevant pixel has the distance parameter value of greater than or equal to 0 is examined if the distance parameter is not updated (-1) (S20).

(g) If some have the distance parameter value of greater than or equal to 0, the value obtained by adding one to that having the distance parameter value of greater than or equal to 0 and a minimum value of the adjacent pixels is set as the distance parameter of the relevant pixel (S21).
(h) A loop escape flag is reset to 0 if none have the distance parameter value of greater than or equal to 0 (S22) and repeat the operation.
(i) The process returns to S16 to repeat the loop from S17 if the loop escape flag is not set (S23) after the process is completed on all the pixels.

If the loop escape flag is set, the loop of S17 is terminated and the process enters the loop of S24. The distance parameter at the time point the loop of S17 is terminated corresponds to the distance to the boundary of a region having the possibility of being subjected to clipping.
The result of performing the relevant loop once is shown in Fig. 9B. The distance parameter value of the pixel adjacent to the pixel having the distance parameter value of 0 is updated to 1. Furthermore, the results of performing the loop twice and three times are shown in Fig. 9C and Fig. 9D. When the loop is performed one more time from the state of Fig. 9D, the pixel having the distance parameter value = -1 no longer exists, and thus the process reaches S23 with the loop escape flag set to 1, and the loop of S17 is terminated.

(j) The loop of S24 corresponds to the process of performing the processes corresponding to the adjustment amount determination unit 15 and the color signal adjustment unit 16 on each pixel.
(k) First, the clip flag of the pixel is checked (S25). If the clip flag is set to 1, the color signal adjustment amount is determined by the function using the distance parameter of the relevant pixel as the argument (S26). The function f shown in Fig. 10 can be used for the function to use here. The function has a domain of $[0, 1] \in R$, and the increase of the color signal adjustment amount is small near where the distance parameter value d is 0. The color signal adjustment amount approaches 1 when the distance parameter value d becomes large to a certain extent, and thereafter saturates. The function f has **characteristics in that** the color signal adjustment amount monotonously increases for the distance parameter value d. Through the use of such function f, conversion of suppressing the color difference with the peripheral pixel to low can be performed on the pixel at the outer periphery of the region subjected to clipping or on the pixel on the inner side by greater than or equal to a certain extent from the outer periphery of the region.
(l) The color signal of the pixel is adjusted using the color signal adjustment amount calculated in S26 (S27). For instance, as shown in Fig. 11, a case in which a YCbCr coordinate of the input color signal is at the end on the lower side of the Cb axis of an xvYCC signal domain will be described. If the color difference of $\Delta Cb$ (<0) exists from the relevant coordinate to the domain end of the color gamut of the output device, the Cb value after the adjustment is obtained using the following function g.

$$g(Cb, \Delta Cb, d) = Cb + \Delta Cb \times f(d)$$

In this function g, the adjustment is carried out by adding the $\Delta Cb$, weighted with the color signal adjustment amount f(d) calculated in the step of S26, to the original input color signal. Here, f(d) does not exceed 1, and thus the color signal value after the adjustment approaches the color gamut surface of the output device as the d according to such method increases. Similar adjustment is carried out on Cr. The YCbCr color signal adjusted in such manner has a value exceeding the domain of the xvYCC color signal.
(m) After the adjustment of the color signal is completed through the above method for each pixel, conversion from the adjusted xvYCC value to an RGB value of the primary colors of the display is performed (S28). Regarding such conversion of the color space, the xvYCC value of each pixel is once mapped to an sRGB color space, and then converted to the RGB value of the primary color of the display through an XYZ color space according to the method disclosed in Japanese Patent Publication No. 3800427. Other equivalent methods may be used, or the conversion may be simplified by referencing the lookup table in which all calculations are carried out in advance.

Through the above methods, the process of searching for the region where the color close to the end of the xvYCC signal domain continues from the input image data, and performing the display such that the color gamut is enlarged towards the outer side of the xvYCC signal domain the more on the inner side of the region can be performed.

(First variant of First Embodiment)

A distance calculation performed in the distance calculation unit 14 of the first embodiment is a simple calculation

of updating the minimum value of the polygonal line distance with a width prioritized search from the outer periphery of the region where the color of the signal domain end continues towards the inner side of the region. If a sufficient resource can be ensured, a more accurate distance can be obtained by obtaining the minimum value of the Euclidean distance with all the pixels at the outer peripheral part of the region with respect to all the pixels in the interior of each region.

Alternatively, a distance to the pixel at the outer periphery of the region may be obtained by searching several directions from the pixel at all the pixels in the interior of each region, and the minimum value thereof may be set as the distance parameter of each pixel. Fig. 12A shows the clipped pixel with the clip flag 1, and the non-clipped pixel with the clip flag 0. The pixel shown with (0) is the outermost peripheral pixel of the region where the non-clipped pixels continue adjacent to the clipped pixel. Fig. 12B is a schematic view showing the process of counting a distance to the pixel not subjected to clipping in eight directions from the pixel subjected to clipping having the coordinate (6, V). In the example of Fig. 12B, starting with the distance parameter = 0 from the pixel having the coordinate (6, V), the search process is performed until the pixel of (0) or the outer periphery of the image while incrementing the distance parameter by one with respect to each direction. The distance parameter at the coordinate (6, V) may be a minimum value of the distance parameters respectively obtained for the eight directions, and is 0 in this case. If the function g for obtaining the color signal adjustment amount has a value of greater than or equal to a constant value with respect to the distance parameter of the argument and the amount of change is sufficiently small, the relevant value may be used as a threshold value for canceling the search.

In each of the above examples, each pixel has only one distance parameter, and the pixel within the region determines the color signal adjustment amount using only the closest pixel outside the region. However, when searching for the closest pixel in plural directions from each pixel, the color signal adjustment amount may be determined using the distance to the closest pixel in all found directions. For instance, the color signal adjustment amount may be calculated once for all the directions and the maximum, minimum, average, median value etc. may be used, or the color signal adjustment amount may be obtained using the average value, the median value, and the like of the distance in all directions.

In the first embodiment, if the pre-process anticipating the color gamut enlargement process according to the method of the present invention can be performed at the stage of creating the xvYCC color signal to be input, the information on the type of function f, g or the parameter such that the error with respect to the original image of the color signal adjustment result becomes a minimum may be embedded in the image or added as meta information. An optimum color gamut enlargement may be performed after maintaining the color reproducibility in the device that does not perform the color gamut enlargement process by extracting the meta information from the image signal. The result of the color gamut enlargement process thus can be guaranteed as always being optimum from the standpoint of error minimum.

As shown in Figs. 13A and 13B, described is a case in which the center portion is the color signal in the domain but the periphery thereof is outside the domain, and the color signal is discontinuous at the boundary of the center portion and the periphery. In this example, the peripheral portion of the circle becomes the color signal of the domain end when subjected to clipping in Fig. 13B. In this case, the adjustment is carried out such that the color signal becomes continuous near the boundary when adjustment is performed to increase the color signal adjustment amount according to the distance from the boundary, and hence the adjustment opposite to the original gradation of Fig. 13B is performed at the periphery of the center circle as in Fig. 13C. In the above-described variant, an optimum determination method of the color signal adjustment amount is defined with the meta information, and hence the original image signal can be reproduced by specifying the function in which the adjustment amount is reduced according to the distance from the boundary, as corresponding to Figs. 13A and 13B, to function f, g.

If sufficient capacity cannot be ensured for the image buffer memory 12 or if sufficient resource is not assigned for the search of the closest pixel, a method of suppressing the size of the image buffer memory 12 to only worth one horizontal line of the image may be adopted. In this case, the distance calculation is performed only on the horizontal direction.

A counter representing the distance from the region end may be arranged for use in place of the image buffer memory 12. In this case, the count of the distance is carried out only in the right direction from the left of the region. The color signal adjustment amount may become unnaturally large near the right end of the region in particular, but the adverse affect can be suppressed to a certain extent by calculating the appropriate functions f, g or the parameters in advance at the stage of creating the input image. For instance, the effect of color gamut enlargement can be easily obtained with only the distance calculation from one direction by selecting the function of another example shown in Fig. 14 for the function f, and appropriately defining the parameters a, b. In other words, the effect same as having the image buffer memory worth substantially one line can be obtained by defining the parameter such that a + b + a matches a horizontal width of the region over the entire screen.

(Second variant of First Embodiment)

In the first embodiment, the function in which the color signal adjustment amount monotonously increases

smoothly with respect to the distance parameter of each pixel is used. In this method, the region after the adjustment becomes a gradation directed towards the interior of the region if all-one color region of the color of the signal domain end exists. A circuit for adding noise to the region after the adjustment may be added if the smooth gradation appears unnatural. Alternatively, use may be made after adding noise to the function f of the distance parameter d used in the adjustment amount determination unit 15 and the color signal adjustment amount. The noise pattern may be created based on empirical rule and then added, or the dark current noise pattern of the imaging device used to create the input signal may be superimposed as a template.

(Second Embodiment)

Fig. 15 is a block diagram showing a configuration of an image signal processing device 10a according to a second embodiment of the present invention. Compared to the image signal processing device according to the first embodiment, the image signal processing device 10a differs in that the color space conversion unit 18 is arranged between the image buffer memory 12 and the color signal adjustment unit 16. In other words, the adjustment is made on the xvYCC color signal before converting the xvYCC color signal to the RGB color signal in the first embodiment. In the second embodiment, on the other hand, the color adjustment is made within the RGB color space after the conversion from the xvYCC color signal to the RGB color signal. Furthermore, in the image signal processing device 10a, the xvYCC color signal subjected to the conversion of a predetermined color space for the Adobe RGB color signal is input, the pixel having the possibility of being subjected to clipping is determined, a color signal adjustment amount is calculated for the xvYCC color signal of the relevant pixel, and conversion is made to the RGB value of the primary colors of the wide color gamut display so as to partially exceed the xvYCC signal domain. In the image signal processing device 10a, the RGB color gamut of the display is spread to outside the xvYCC signal domain, and thus the clipping is compensated using the portion of the spread color gamut.

Thus, the adjustment amount determination unit 15 determines the color signal adjustment amount of the RGB color signal of the primary colors of the display after the conversion based on the outputs of the clip determination unit 13 and the distance calculation unit 14. The color signal adjustment unit 16 adjusts the RGB color signal based on the output of the adjustment amount determination unit 15. The image signal output unit 17 outputs the RGB color signal after the adjustment.

In the above-described image signal processing device, the adjustment of "lowering the color saturation with the luminance constant" becomes difficult, as opposed to the adjustment in the YCbCr space in the first embodiment. The determination on whether or not exceeding the color gamut of the output device can be made with only an overflow/underflow determination of the RGB value.

Fig. 16 is a flowchart of the image signal processing program executed by a computer according to the second embodiment of the present invention.

(a) The image signal using a first color signal (xvYCC color signal) is received for every pixel (S31).
(b) Whether or not the first color signal (xvYCC color signal) is the neighboring color of the end of the domain of the color space (domain end of xvYCC color gamut) or of a specific color gamut end (neighboring color of the domain end of the Adobe RGB color gamut) is determined (S32).
(c) A distance to the closest pixel determined as not the neighboring color of the end of the domain of the color space and the specific color gamut end (neighboring color of the Adobe RGB color gamut end) is calculated (S33).
(d) The color space is converted from the first color signal (xvYCC color signal) defined by the first color space to the third color signal (RGB color signal) defined by the third color space (S34).
(e) The color signal adjustment amount with respect to the third color signal (RGB color signal) in each pixel is calculated based on the distance to the closest pixel (S35).
(f) The third color signal (RGB color signal) in each pixel is adjusted by the color signal adjustment amount to obtain the second color signal (RGB color signal) (S36).
(g) The image signal using the second color signal (RGB color signal) is output (S37).

(Third Embodiment)

Fig. 17 is a block diagram showing a configuration of an image signal processing device 10b according to a third embodiment of the present invention. Compared to the image signal processing devices according to the first and second embodiments, the image signal processing device 10b differs in that the color space conversion unit 18 is not arranged. The difference also lies in receiving the sYCC signal color space converted through the color gamut compression process such as clipping from the Adobe RGB signal.

The image signal processing device 10b includes the image signal input unit 11, the image buffer memory 12, the clip determination unit 13, the distance calculation unit 14, the adjustment amount determination unit 15, the color

signal adjustment unit 16, and the image signal output unit 17. The image signal input unit 11 receives the sYCC signal color space converted through the color gamut compression process such as clipping from a wide color gamut color signal (e.g., Adobe RGB signal shown in Fig. 1 etc.) in a digital camera and the like. Assume that the clipping to the sRGB color gamut is performed here. The image buffer memory 12 holds still image data. The clip determination unit 13 determines whether or not the sYCC signal input to the image signal input unit 11 is the neighboring color of the sRGB color gamut end, where if it is the neighboring color of the sRGB color gamut end, interpretation is made that there is a possibility the clipping was performed when converting from the wide color gamut color space such as the Adobe RGB to the sRGB color gamut. The distance calculation unit 14 calculates a distance with the closest pixel determined as not the neighboring color of the domain of the sRGB color gamut end by the clip determination unit 13 with respect to the pixel determined as the neighboring color of the sRGB color gamut end by the clip determination unit 13. The adjustment amount determination unit 15 determines a color signal adjustment amount of the sYCC color signal based on the outputs of the clip determination unit 13 and the distance calculation unit 14. Furthermore, the color signal adjustment unit 16 adjusts the sYCC color signal based on the output of the adjustment amount determination unit 15, and obtains the adjusted xvYCC color signal. The image signal output unit 17 outputs the obtained xvYCC color signal.

The clip determination unit 13, the distance calculation unit 14, and the adjustment amount determination unit 15 configure the color signal adjustment amount calculating section 20. In the color signal adjustment amount calculating section 20, the pixel having the possibility of being subjected to clipping is determined, a pixel distance, that is, a distance parameter, to the pixel determined as not being subjected to clipping is calculated, and the color signal adjustment amount is determined based on the distance parameter.

The image signal processing device 10b receives the sYCC signal clipped to the sRGB color gamut as the input image signal, specifies the pixel having the possibility of being subjected to clipping, and calculates the color signal adjustment amount with respect to each pixel. Thereafter, the Cr value and the Cb value in the sYCC signal of each pixel are adjusted based on the color signal adjustment amount, and then the xvYCC signal is obtained and output. In the image signal processing device 10b, the color gamut is enlarged from the sYCC signal to the xvYCC signal, and output as the xvYCC signal. In other words, the video source performed with authoring in sYCC can be applied as a converter for enlarging the color gamut for wide color gamut display.

In the above example, the process is performed based on the premise that the input sYCC signal is clipped to the sRGB color gamut, but the clipping may be compensated through the method similar to the first embodiment not in view of the clipping to the sYCC signal domain end but in view of a case in which the conversion from the wide color gamut signal such as Adobe RGB to the sYCC color space and the clipping are directly performed.

Fig. 18 is a flowchart of the image signal processing program executed by a computer according to the third embodiment of the present invention.

(a) The image signal using a first color signal (sYCC color signal) is received for every pixel (S41).
(b) The color signal adjustment amount with respect to the color signal (sYCC signal) in each pixel is determined (S42).
(c) The color signal (sYCC signal) in each pixel is adjusted by the color signal adjustment amount to obtain the second color signal (xvYCC color signal) (S43).
(d) The image signal using the second color signal (xvYCC signal) is output (S44).

Fig. 19 is a flowchart showing the details of the step (S42) of determining the color signal adjustment amount of Fig. 18.

(a) Whether or not the first color signal (sYCC color signal) is the neighboring color of the specific color gamut end (sRGB color gamut end) is determined (S51). If it is the neighboring color of the relevant color gamut end, interpretation is made that there is a possibility of clipping from the Adobe RGB, the wide gamut RGB, or the like to the relevant color gamut.
(b) A distance, that is, a distance parameter to the closest pixel determined as not being subjected to clipping from the pixel having the possibility of being subjected to clipping is calculated (S52).
(c) The color signal adjustment amount with respect to the color signal in each pixel is determined based on the distance (distance parameter) to the closest pixel (S53). This is to change the color signal adjustment amount according to the distance parameter from the boundary of the clipping portion assuming that the gradation exists towards the inner side of the pixel having the possibility of being subjected to clipping.

(Fourth Embodiment)

Compared to the image signal processing devices of the first to third embodiments, an image signal processing device according to a fourth embodiment of the present invention differs in that green and cyan, and red that ran out from the xvYCC domain are separately handled instead of handling all the pixels subjected to color signal adjustment

in the same row. In this case, the color signals running out in a + direction and a - direction of the Cb, Cr axes of the YCbCr space are separately handled. Thus, the loop of S17 is repeated for a total of four times to obtain the distance parameter in the flowcharts of Fig. 8A and 8B.

(Fifth Embodiment)

Fig. 20 is a block diagram showing a configuration of an image signal processing device 10c according to a fifth embodiment of the present invention. Compared to the image signal processing device according to the first to fourth embodiments, the image signal processing device 10c differs in that an adjustment value calculation unit 20 for calculating the color signal adjustment value includes a characteristic extracting unit 21, a color signal adjustment amount dictionary 22, and a dictionary searching unit 23. The characteristic extracting unit 21 extracts a characteristic image signal having a signal distance vector from the end of the domain of the color space defining the first color signal as an element. The color signal adjustment amount dictionary 22 records a characteristic image signal and a color signal adjustment amount for restoring the image before clipping in association with each other. The dictionary searching unit 23 obtains the color signal adjustment amount corresponding to the characteristic image signal from the color signal adjustment amount dictionary.

In the first to third embodiments, the color signal adjustment value is calculated from the relationship of a pixel distance d from the color signal domain or the end of the specific color domain and the color signal adjustment value function f. In the image signal processing device 10c, on the other hand, the color signal adjustment amount dictionary 22 in which the characteristic image signal and the color signal adjustment amount for restoring the image before clipping are recorded in association with each other is used. In the image signal processing device 10c, the color signal adjustment amount corresponding to the characteristic image signal can be obtained by the color signal adjustment amount dictionary 22. The color signal adjustment amount dictionary 22 is built by learning the correspondent relationship of the characteristic image signal extracted from the image signal subjected to clipping and the color signal adjustment value for obtaining the image data before clipping.

Fig. 21 is a flowchart of the image signal processing method according to the fifth embodiment of the present invention.

(a) The image signal using a first color space is received for every pixel (S61).

(b) The characteristic image signal having the signal distance vector from the end of the color space domain as an element is extracted from the image signal (S62).

For instance, signal distances Db, Dr from the domain end of the xvYCC color gamut is calculated by the color based on the Cb, Cr with respect to the xvYCC color signal of each pixel.

$$D_b = \begin{cases} 0 < Cb \leq 5 : Cb - 5 \\ 250 \leq Cb < 255 : Cb - 250 \\ otherwise : 0 \end{cases}$$

Dr is obtained similar to Db. When Db and Dr are calculated based on the above equation, the color signal characteristic image having a signal distance vector (Y, Db, Dr) in which Db, Dr take a value in the range of [-4, +4], respectively, as an element can be obtained. The region of 5 from the domain end of Cb, Cr is assumed as the value region used by clipping from outside the domain, where Db, Dr correspond to the color gamut compression amount.

(c) The color signal adjustment amount for restoring the image before clipping is obtained from the color signal adjustment amount dictionary 22 based on the characteristic image signal (S63). The color signal adjustment amount dictionary 22 records the characteristic image signal and the color signal correction value image having a function g value for restoring the image before clipping as the value of each pixel in association with each other. The signal distance vector (Y, Db, Dr) is the element in the color signal characteristic image. The color signal correction image can be obtained with the signal distance vector (Y, Db, Dr) as the search key. An image created by applying an appropriate window on one part of the original image is used for the color signal characteristic image and the color signal correction image, and the color signal adjustment amount of each pixel can be obtained while shifting the window position.

(d) The first color signal in each pixel is adjusted by the color signal adjustment amount to obtain the second color signal (S64).

(e) The color space is converted from the second color signal to the third color signal defined by the third color space (S65).

(f) The image signal using the third color signal is output (S66).

Fig. 22 is a block diagram showing a configuration of a color signal adjustment value dictionary learning device 30. The color signal adjustment value dictionary learning device 30 includes an xvYCC conversion unit 31, a characteristic extracting unit 32, and a learning unit 33. The xvYCC conversion unit 31 performs conversion from the Adobe RGB image signal to the xvYCC image signal, and calculates the YCbCr difference value at the time of clipping. The characteristic extracting unit 21 extracts the characteristic image signal having the signal distance vector (Y, Db, Dr) from the end of the domain as the element from the xvYCC image signal. The learning unit 33 stores the characteristic image signal and the color signal adjustment amount for restoring the image before clipping in association with the color signal adjustment amount dictionary 22.

Fig. 23 is a flowchart of a learning program for causing the computer to execute the learning method of the color signal adjustment value dictionary 22.

(a) The Adobe RGB image signal is converted to the xvYCC image signal, and a difference at the time of clipping is calculated (S71).

(b) The characteristic image signal having the signal distance vector (Y, Db, Dr) from the end of the domain of the color space as an element is extracted from the image signal after clipping (S72).

(c) The characteristic image signal and the color signal adjustment amount for restoring the image before clipping are learnt in association with each other (S73).

(d) The characteristic image signal and the color signal adjustment amount for restoring the image before clipping are saved in the color signal adjustment amount dictionary 22 in association with each other (S74).

Industrial Applicability

The image signal processing device and the image signal processing program according to the present invention can effectively use the entire gamut of the output device while taking the clipping into consideration even when receiving the input of the image signal containing the color signal having a possibility of being clipped. Use can be made as an image output device having a color gamut exceeding the domain of the image signal.

## Claims

**1.** An image signal processing device for receiving an image signal using a first color signal, and converting the image signal to image data using a second color signal to output the image data, the image signal processing device comprising:

an image signal input unit operable to receive the image signal using the first color signal for every pixel;
a clip determination unit operable to determine whether or not the first color signal is a color signal of an end of a domain of a color space defining the first color signal or a neighboring color of a specific color gamut end existing within the domain of the color space;
a distance calculation unit operable to calculate a distance to a closest pixel determined as not being the end of the domain of the color space or as being the neighboring color of the specific color gamut end with respect to a pixel determined as the color signal of the end of the domain of the color space or the neighboring color of the specific color gamut end;
an adjustment amount determination unit operable to determine a color signal adjustment amount with respect to a color signal in each pixel based on the outputs of the clip determination unit and the distance calculation unit;
a color signal adjustment unit operable to adjust the color signal in each pixel by the color signal adjustment amount based on the output of the color signal adjustment amount determination unit to obtain the second color signal; and
an image signal output unit operable to output the image signal using the second color signal.

**2.** The image signal processing device according to claim 1, wherein the image signal using the first color signal is subjected to conversion of a color space from a color signal defined by a color space different from the color signal defining the first color signal, the first color signal converted from a color signal of a color gamut that cannot be expressed with the color space defining the first color signal being trimmed.

3. The image signal processing device according to claim 2, wherein the different color space before conversion to the first color signal is one of Adobe RGB, wide gamut RGB, DCI standard, or NTSC.

4. The image signal processing device according to claim 1, wherein the image signal input unit receives an input of metadata related to trimming in the first color signal of the image signal along with the image signal; and
the adjustment amount determination unit prepares plural types of functions for obtaining the color signal adjustment amount of the color signal in advance, selects the function based on the metadata and also selects a parameter value of the selected function, and determines the color signal adjustment amount using the selected function.

5. The image signal processing device according to claim 1, wherein the color signal adjustment unit superimposes an appropriate noise on the second color signal after processing so that an interior of a region to be processed does not become a very smooth gradation or superimposes noise on the color signal adjustment amount in advance, and then performs a color signal adjustment process.

6. The image signal processing device according to claim 1, further comprising:

a color space conversion unit operable to convert a color space from the first color signal defined by the first color space to the third color signal defined by a third color space different from the first color space;
wherein the adjustment amount determination unit determines the color signal adjustment amount with respect to the third color signal in each pixel;
the color signal adjustment unit adjusts the third color signal in each pixel by the color signal adjustment amount to obtain the second color signal; and
the image signal output unit outputs the second color signal.

7. The image signal processing device according to claim 1, further comprising:

a color space conversion unit operable to convert a color space from the second color signal to the third color signal defined by a third color space different from the color space defining the second color signal;
wherein the image signal output unit outputs an image signal using the third color signal.

8. The image signal processing device according to claim 6 or 7, wherein the first color space is xvYCC, and the third color space is RGB.

9. An image signal processing device for receiving an image signal using a first color signal, and converting the image signal to image data using a second color signal to output the image data, the image signal processing device comprising:

an image signal input unit operable to receive the image signal using the first color signal for every pixel;
a characteristic extracting unit operable to extract a characteristic image signal having a signal distance vector from an end of a domain of a color space defining the first color signal as an element from the image signal;
a dictionary searching unit operable to obtain a color adjustment amount corresponding to the characteristic image signal from a color signal adjustment amount dictionary in which the characteristic image signal and a color signal adjustment amount for restoring an image before clipping are recorded in association with each other;
a color signal adjustment unit operable to adjust the color signal in each pixel by the color signal adjustment amount to obtain the second color signal; and
an image signal output unit operable to output the image signal using the second color signal.

10. An image signal processing computer program for causing a computer to execute an image signal processing method of receiving an image signal using a first color signal, and converting the image signal to image data using a second color signal to output the image data, the image signal processing method comprising:

an image signal input step of receiving the image signal using the first color signal for every pixel;
a clip determination step of determining whether or not the first color signal is a color signal of an end of a domain of a color space defining the first color signal or a neighboring color of a specific color gamut end existing within the domain of the color space for each pixel;
a distance calculation step of calculating a distance to a closest pixel determined as not the end of the domain of the color space or the neighboring color of the specific color gamut end with respect to a pixel determined as the color signal of the end of the domain of the color space or the neighboring color of the specific color

gamut end by the clip determination step;
an adjustment amount determination step of determining a color signal adjustment amount with respect to a color signal in each pixel based on the distance to the closest pixel;
a color signal adjustment step of adjusting the color signal in each pixel by the color signal adjustment amount to obtain the second color signal; and
an image signal output step of outputting the image signal using the second color signal.

**11.** The image signal processing program according to claim 10, wherein the image signal using the first color signal is subjected to conversion from a color signal defined by a color space different from the first color space, the first color signal converted from a color signal of a color gamut that cannot be expressed with the color space defining the first color signal being trimmed.

**12.** The image signal processing program according to claim 10, wherein the image signal input step includes receiving an input of metadata related to trimming in the first color signal of the image signal along with the image signal; and the adjustment amount determination step includes preparing plural types of functions for obtaining the color signal adjustment amount of the color signal in advance, selecting the function based on the metadata and also selecting a parameter value of the selected function, and determining the color signal adjustment amount using the selected function.

**13.** The image signal processing program according to claim 10, wherein the color signal adjustment steps includes superimposing an appropriate noise on the second color signal after processing so that an interior of a region to be processed does not become a very smooth gradation, or superimposing noise on the color signal adjustment amount in advance and then performing a color signal adjustment process.

**14.** The image signal processing program according to claim 10, further comprising:

a color space conversion step of converting a color space from the first color signal defined by the first color space to the third color signal defined by a third color space different from the first color space; wherein
the adjustment amount determination step includes determining the color signal adjustment amount with respect to the third color signal in each pixel;
the color signal adjustment step includes adjusting the third color signal in each pixel by the color signal adjustment amount to obtain the third color signal; and
the image signal output step includes outputting the third color signal.

**15.** The image signal processing program according to claim 10, further comprising:

a color space conversion step of converting a color space from the second color signal to the third color signal defined by a third color space different from the color space defining the second color signal; wherein
the image signal output step includes outputting an image signal using the third color signal.

**16.** An image signal processing computer program for causing a computer to execute an image signal processing method of receiving an image signal using a first color signal, and converting the image signal to image data using a second color signal to output the image data, the image signal processing method comprising:

an image signal input step for receiving the image signal using the first color signal for every pixel;
a characteristic extracting step of extracting a characteristic image signal having a signal distance vector from an end of a domain of a color space defining the first color signal as an element from the image signal;
a dictionary searching step of obtaining a color adjustment amount corresponding to the characteristic image signal from a color signal adjustment amount dictionary in which the characteristic image signal and a color signal adjustment amount for restoring an image before clipping are recorded in association with each other;
a color signal adjustment step of adjusting the color signal in each pixel by the color signal adjustment amount to obtain the second color signal; and
an image signal output step of outputting the image signal using the second color signal.

*Fig.1*

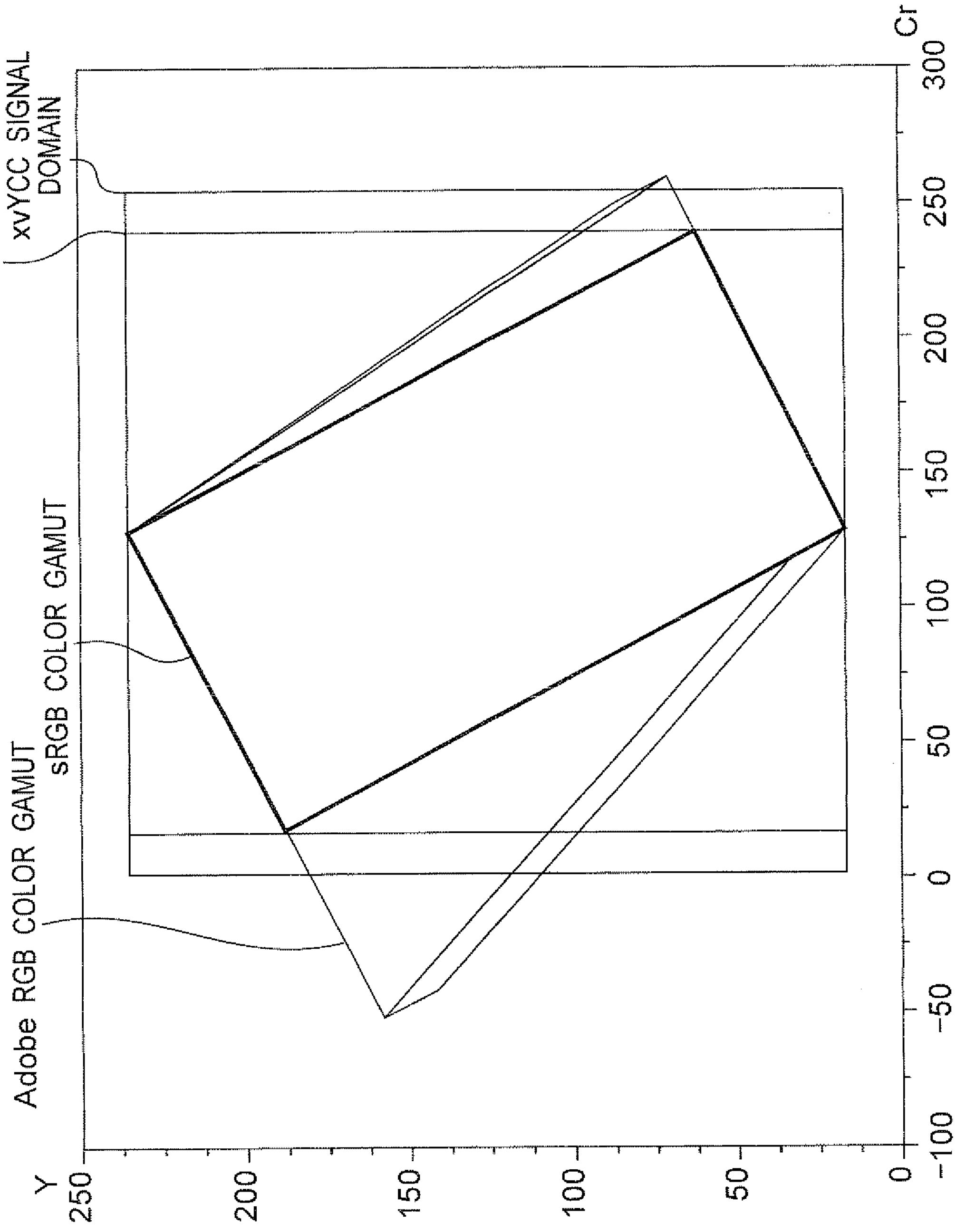
sYCC SIGNAL DOMAIN
xvYCC SIGNAL DOMAIN
sRGB COLOR GAMUT
Adobe RGB COLOR GAMUT
Y
250
200
150
100
50
0
Cr
-100
-50
0
50
100
150
200
250
300

Fig.2A

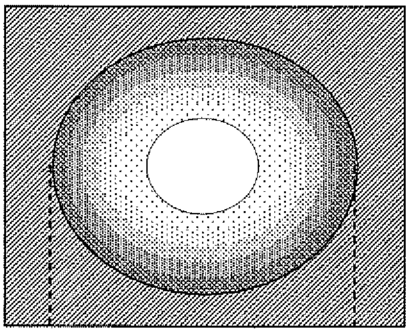

Fig.2B

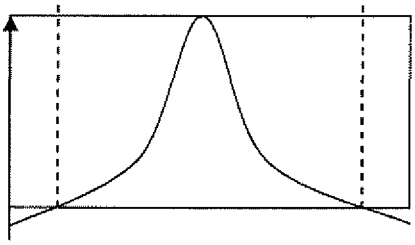

Fig.3A

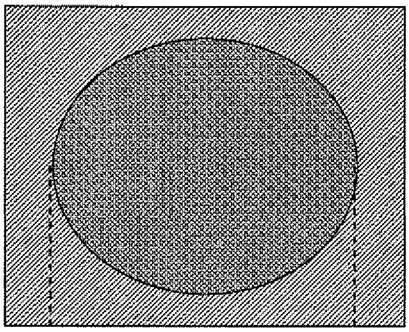

Fig.3B

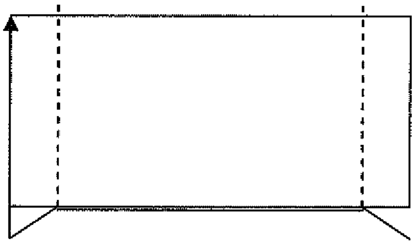

Fig.4A

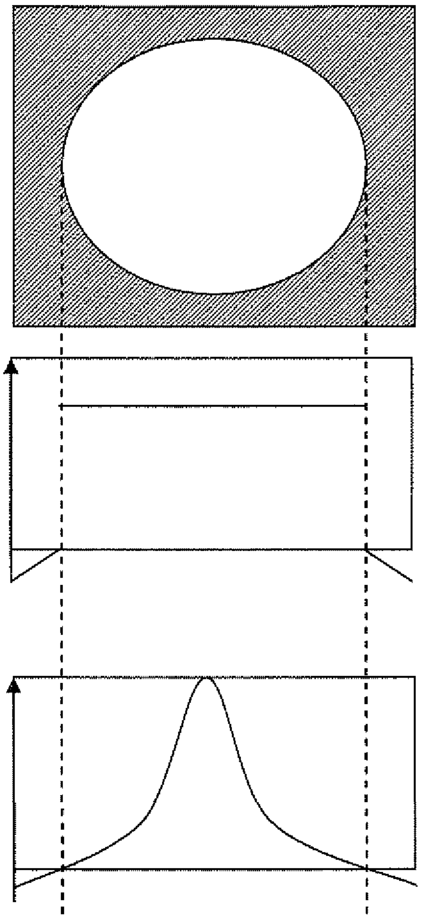

Fig.4B

Fig.4C

Fig.5

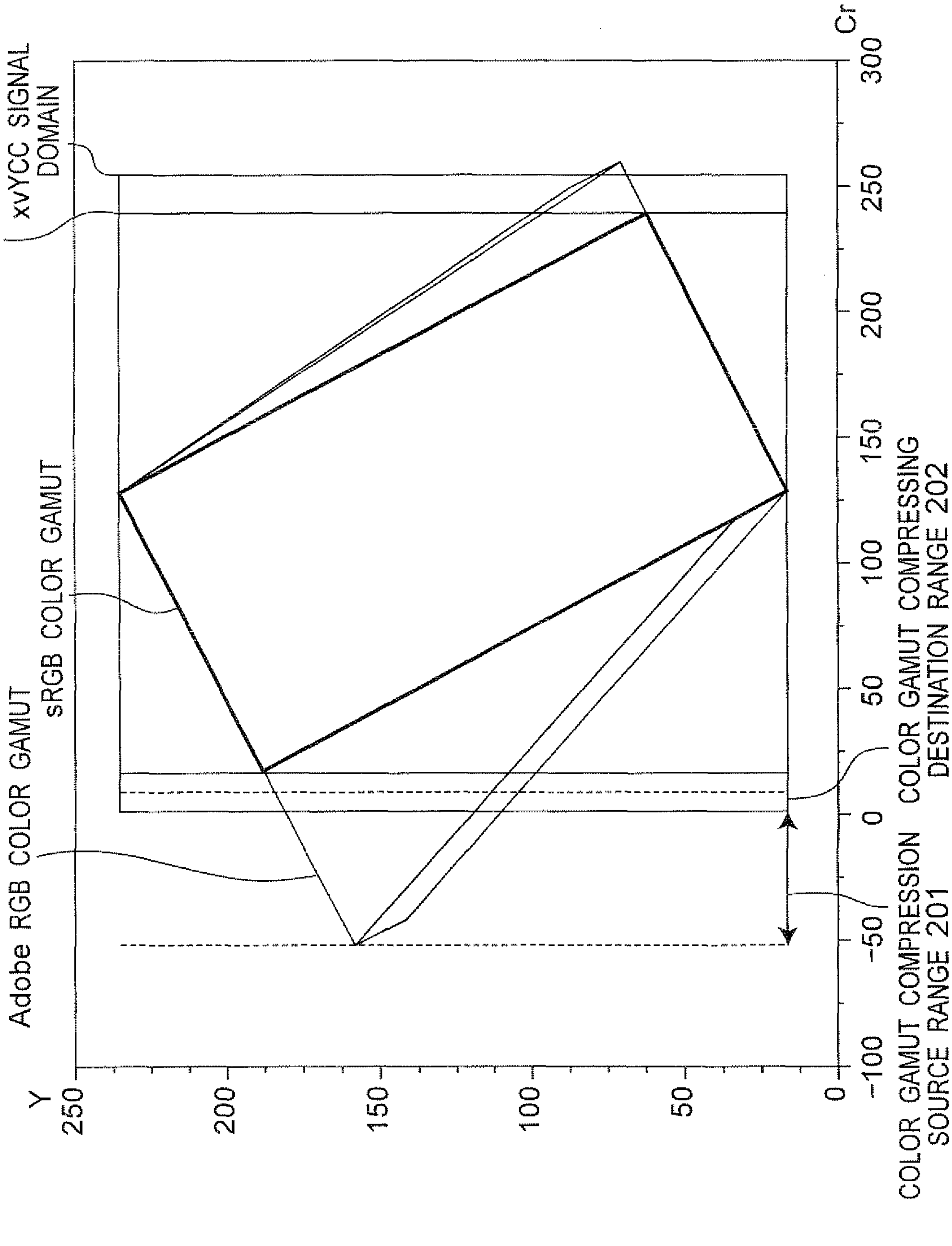

Adobe RGB COLOR GAMUT
sRGB COLOR GAMUT
sYCC SIGNAL DOMAIN
xvYCC SIGNAL DOMAIN
Y
250
200
150
100
50
0
−100
−50
0
50
100
150
200
250
300
Cr
COLOR GAMUT COMPRESSION SOURCE RANGE 201
COLOR GAMUT COMPRESSING DESTINATION RANGE 202

Fig.6

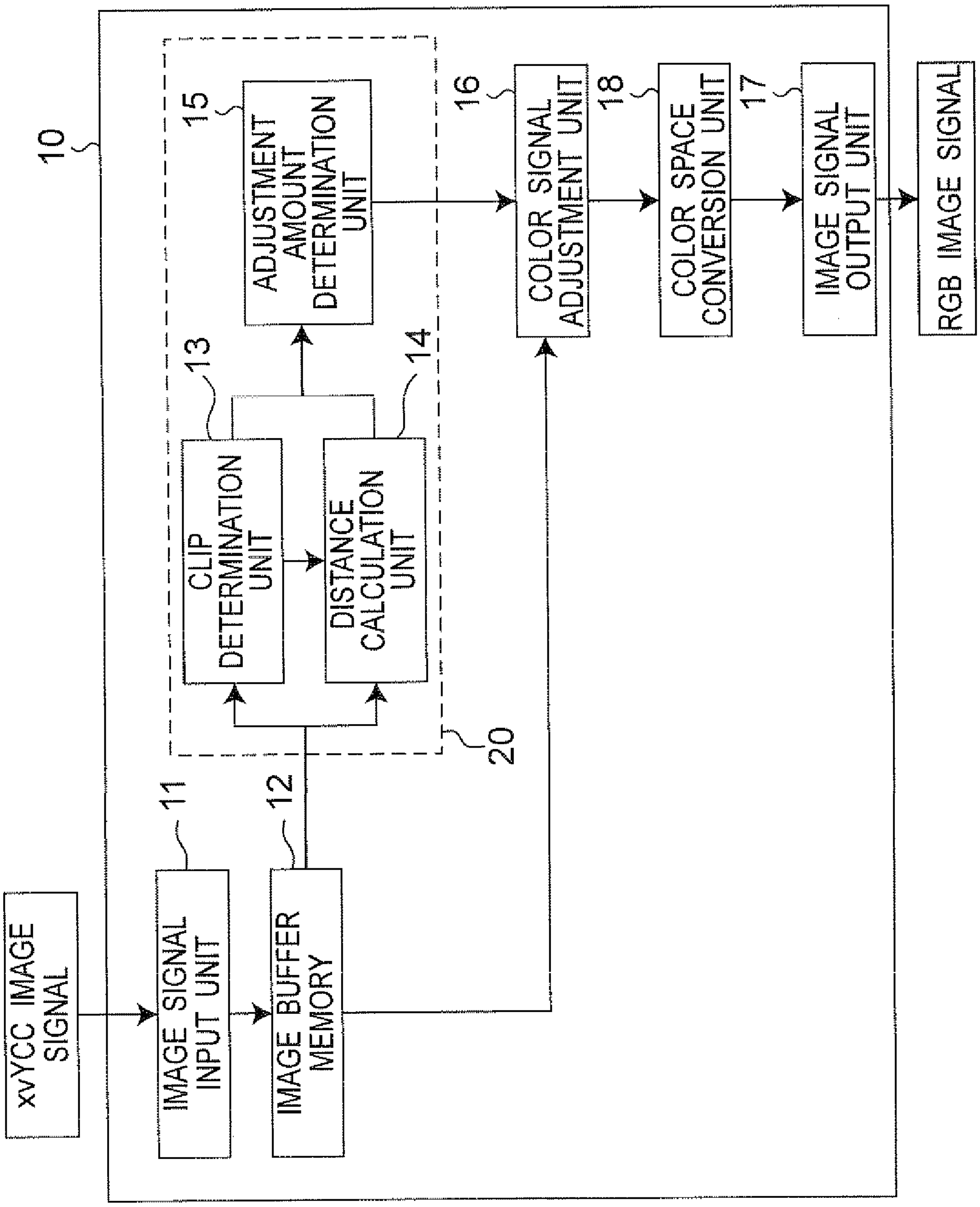
xvYCC IMAGE SIGNAL
10
IMAGE SIGNAL INPUT UNIT
11
IMAGE BUFFER MEMORY
12
CLIP DETERMINATION UNIT
13
DISTANCE CALCULATION UNIT
14
ADJUSTMENT AMOUNT DETERMINATION UNIT
15
20
COLOR SIGNAL ADJUSTMENT UNIT
16
COLOR SPACE CONVERSION UNIT
18
IMAGE SIGNAL OUTPUT UNIT
17
RGB IMAGE SIGNAL

Fig.7

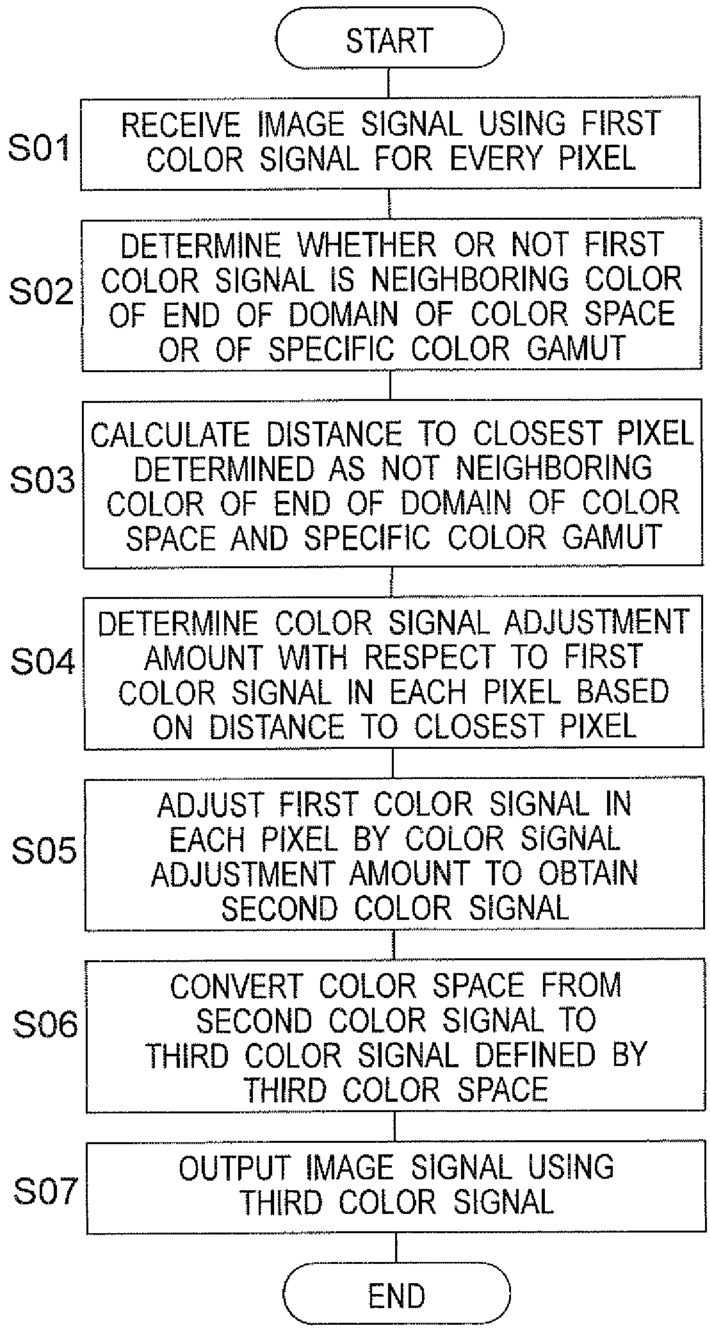
START
S01
RECEIVE IMAGE SIGNAL USING FIRST COLOR SIGNAL FOR EVERY PIXEL
S02
DETERMINE WHETHER OR NOT FIRST COLOR SIGNAL IS NEIGHBORING COLOR OF END OF DOMAIN OF COLOR SPACE OR OF SPECIFIC COLOR GAMUT
S03
CALCULATE DISTANCE TO CLOSEST PIXEL DETERMINED AS NOT NEIGHBORING COLOR OF END OF DOMAIN OF COLOR SPACE AND SPECIFIC COLOR GAMUT
S04
DETERMINE COLOR SIGNAL ADJUSTMENT AMOUNT WITH RESPECT TO FIRST COLOR SIGNAL IN EACH PIXEL BASED ON DISTANCE TO CLOSEST PIXEL
S05
ADJUST FIRST COLOR SIGNAL IN EACH PIXEL BY COLOR SIGNAL ADJUSTMENT AMOUNT TO OBTAIN SECOND COLOR SIGNAL
S06
CONVERT COLOR SPACE FROM SECOND COLOR SIGNAL TO THIRD COLOR SIGNAL DEFINED BY THIRD COLOR SPACE
S07
OUTPUT IMAGE SIGNAL USING THIRD COLOR SIGNAL
END

*Fig.8A*

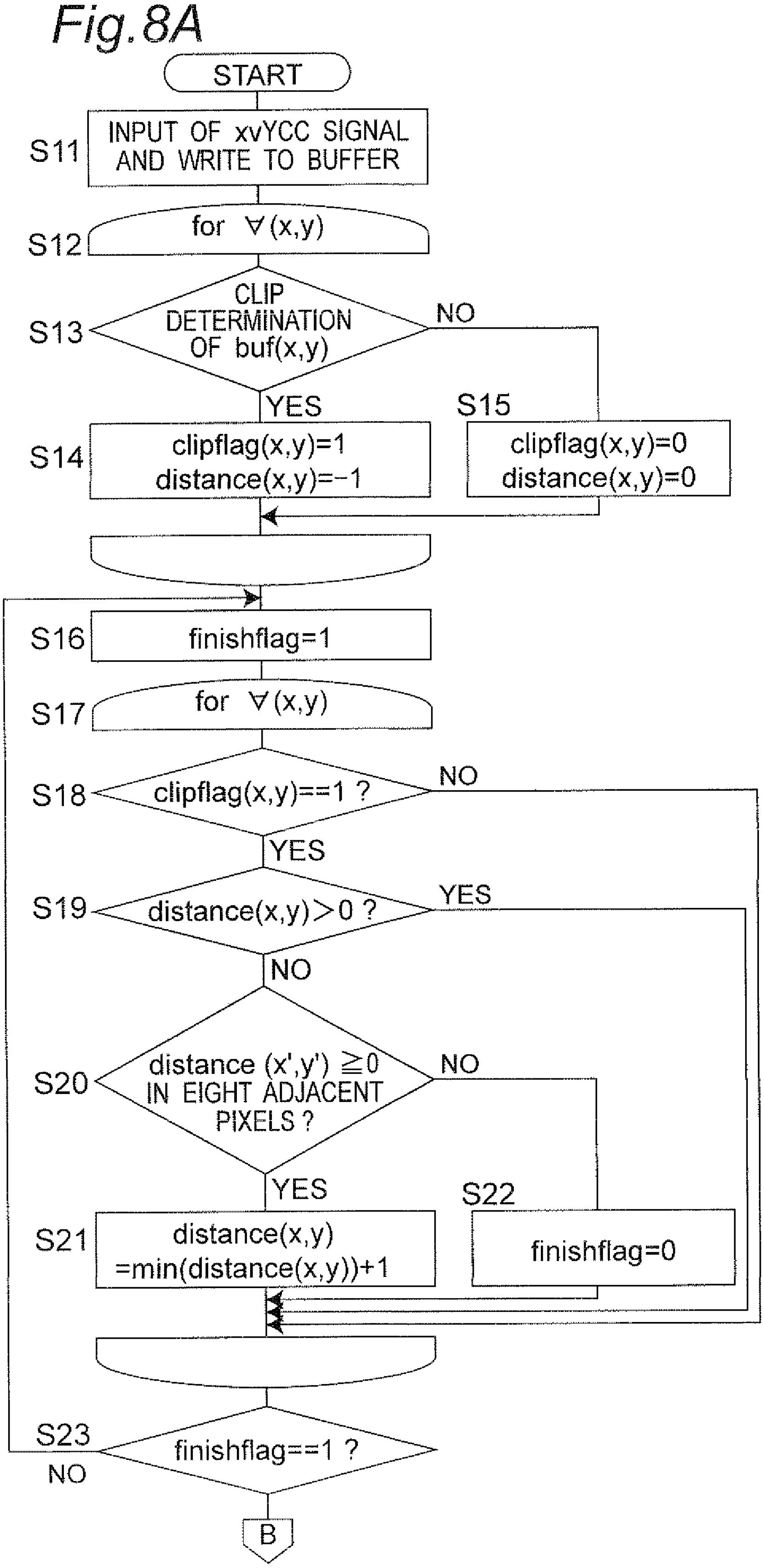
START
S11
INPUT OF xvYCC SIGNAL AND WRITE TO BUFFER
S12
for ∀(x,y)
S13
CLIP DETERMINATION OF buf(x,y)
NO
YES
S14
clipflag(x,y)=1
distance(x,y)=−1
S15
clipflag(x,y)=0
distance(x,y)=0
S16
finishflag=1
S17
for ∀(x,y)
S18
clipflag(x,y)==1 ?
NO
YES
S19
distance(x,y)>0 ?
YES
NO
S20
distance (x',y') ≧0 IN EIGHT ADJACENT PIXELS ?
NO
YES
S21
distance(x,y) =min(distance(x,y))+1
S22
finishflag=0
S23
finishflag==1 ?
NO
B

*Fig.8B*

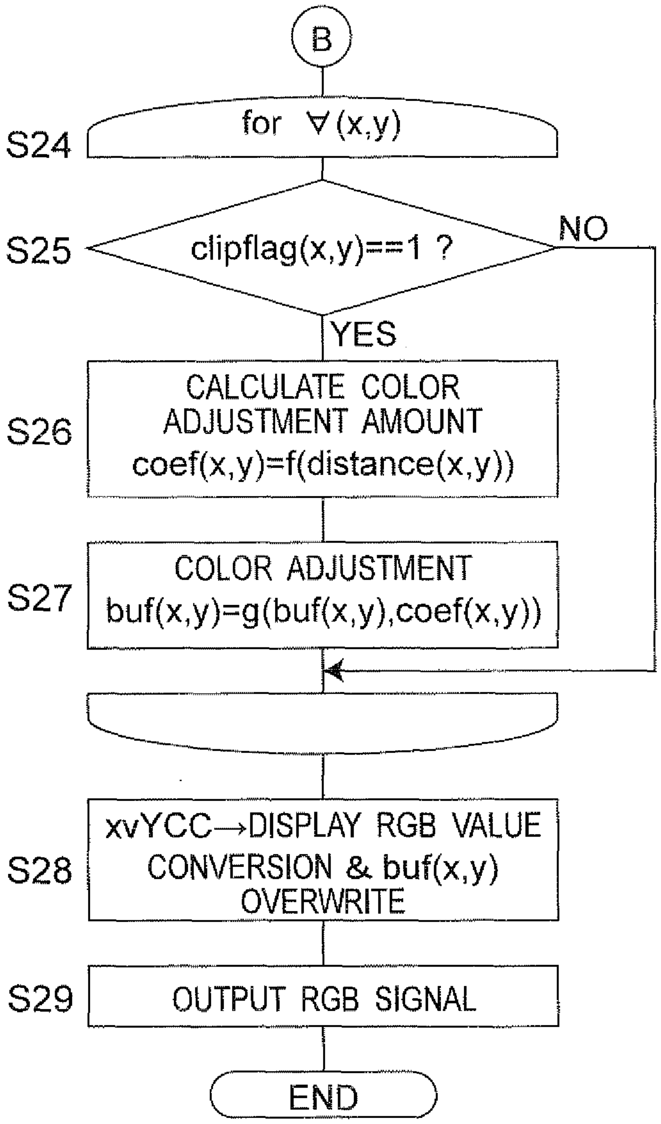
B
S24
for ∀(x,y)
S25
clipflag(x,y)==1 ?
NO
YES
S26
CALCULATE COLOR ADJUSTMENT AMOUNT
coef(x,y)=f(distance(x,y))
S27
COLOR ADJUSTMENT
buf(x,y)=g(buf(x,y),coef(x,y))
S28
xvYCC→DISPLAY RGB VALUE CONVERSION & buf(x,y) OVERWRITE
S29
OUTPUT RGB SIGNAL
END

| | I | II | III | IV | V | VI | VII | VIII | IX |
|---|---|---|---|---|---|---|---|---|---|
| 1 | 0 | 0 | 0 | 0 | 0 | 0 | 0 | 0 | 0 |
| 2 | 0 | 0 | 0 | -1 | -1 | -1 | -1 | -1 | 0 |
| 3 | 0 | 0 | -1 | -1 | -1 | -1 | -1 | 0 | 0 |
| 4 | 0 | -1 | -1 | -1 | -1 | -1 | -1 | 0 | 0 |
| 5 | 0 | -1 | -1 | -1 | -1 | -1 | -1 | 0 | 0 |
| 6 | 0 | -1 | -1 | -1 | -1 | -1 | -1 | -1 | 0 |
| 7 | 0 | -1 | -1 | -1 | -1 | -1 | -1 | -1 | -1 |
| 8 | 0 | -1 | 0 | 0 | -1 | 0 | -1 | -1 | -1 |
| 9 | -1 | 0 | 0 | 0 | -1 | 0 | -1 | -1 | -1 |

Fig. 9A

| | I | II | III | IV | V | VI | VII | VIII | IX |
|---|---|---|---|---|---|---|---|---|---|
| 1 | 0 | 0 | 0 | 0 | 0 | 0 | 0 | 0 | 0 |
| 2 | 0 | 0 | 0 | 1 | 1 | 1 | 1 | 1 | 0 |
| 3 | 0 | 0 | 1 | 1 | -1 | -1 | 1 | 0 | 0 |
| 4 | 0 | 1 | 1 | -1 | -1 | -1 | 1 | 0 | 0 |
| 5 | 0 | 1 | -1 | -1 | -1 | -1 | 1 | 0 | 0 |
| 6 | 0 | 1 | -1 | -1 | -1 | -1 | 1 | 1 | 0 |
| 7 | 0 | 1 | 1 | 1 | 1 | 1 | 1 | -1 | 1 |
| 8 | 0 | 1 | 0 | 0 | 1 | 0 | 1 | -1 | -1 |
| 9 | 1 | 0 | 0 | 0 | 1 | 0 | 1 | -1 | -1 |

Fig. 9B

Fig. 9C

| | I | II | III | IV | V | VI | VII | VIII | IX |
|---|---|---|---|---|---|---|---|---|---|
| 1 | 0 | 0 | 0 | 0 | 0 | 0 | 0 | 0 | 0 |
| 2 | 0 | 0 | 0 | 1 | 1 | 1 | 1 | 1 | 0 |
| 3 | 0 | 0 | 1 | 1 | 2 | 2 | 1 | 0 | 0 |
| 4 | 0 | 1 | 1 | 2 | 2 | 2 | 1 | 0 | 0 |
| 5 | 0 | 1 | 2 | 2 | -1 | 2 | 1 | 0 | 0 |
| 6 | 0 | 1 | 2 | 2 | 2 | 2 | 1 | 1 | 0 |
| 7 | 0 | 1 | 1 | 1 | 1 | 1 | 1 | 2 | 1 |
| 8 | 0 | 1 | 0 | 0 | 1 | 0 | 1 | 2 | 2 |
| 9 | 1 | 0 | 0 | 0 | 1 | 0 | 1 | 2 | -1 |

Fig. 9D

| | I | II | III | IV | V | VI | VII | VIII | IX |
|---|---|---|---|---|---|---|---|---|---|
| 1 | 0 | 0 | 0 | 0 | 0 | 0 | 0 | 0 | 0 |
| 2 | 0 | 0 | 0 | 1 | 1 | 1 | 1 | 1 | 0 |
| 3 | 0 | 0 | 1 | 1 | 2 | 2 | 1 | 0 | 0 |
| 4 | 0 | 1 | 1 | 2 | 2 | 2 | 1 | 0 | 0 |
| 5 | 0 | 1 | 2 | 2 | 3 | 2 | 1 | 0 | 0 |
| 6 | 0 | 1 | 2 | 2 | 2 | 2 | 1 | 1 | 0 |
| 7 | 0 | 1 | 1 | 1 | 1 | 1 | 1 | 2 | 1 |
| 8 | 0 | 1 | 0 | 0 | 1 | 0 | 1 | 2 | 2 |
| 9 | 1 | 0 | 0 | 0 | 1 | 0 | 1 | 2 | 3 |

Fig.10

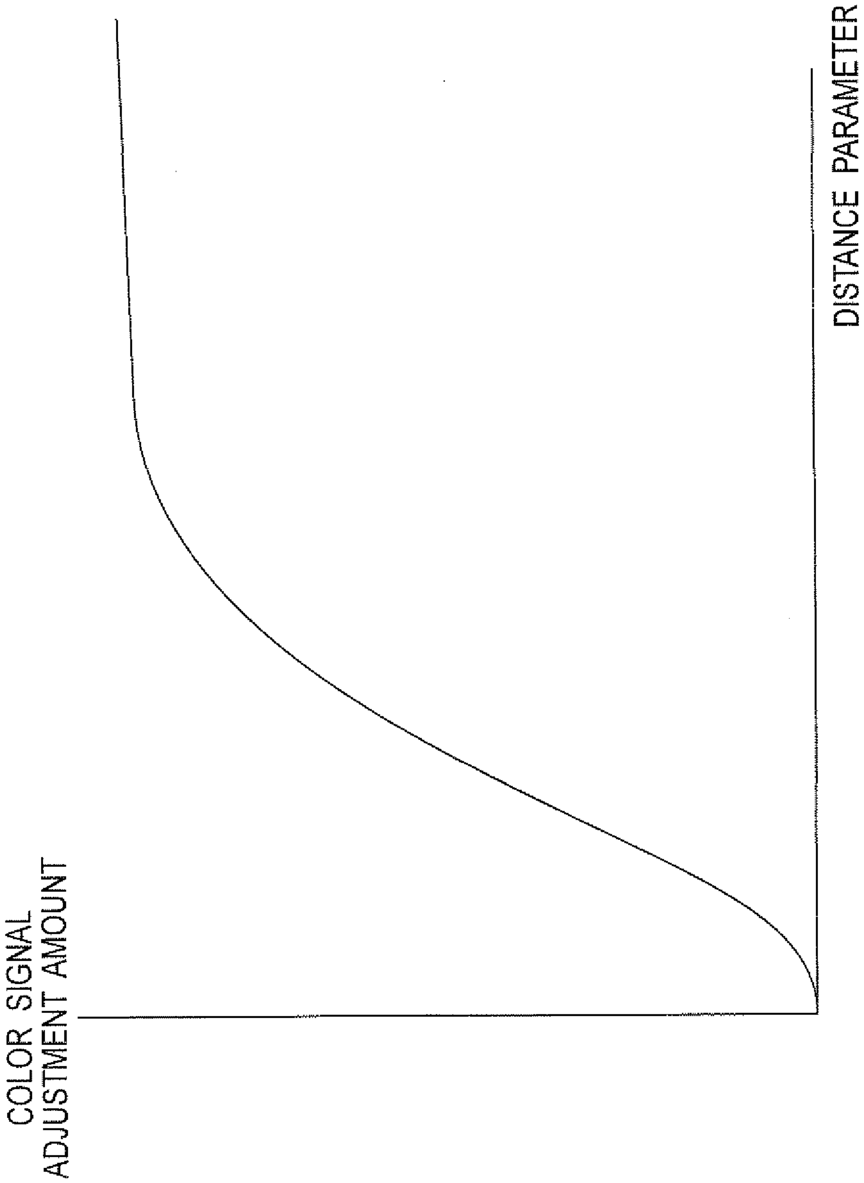

Fig. 11

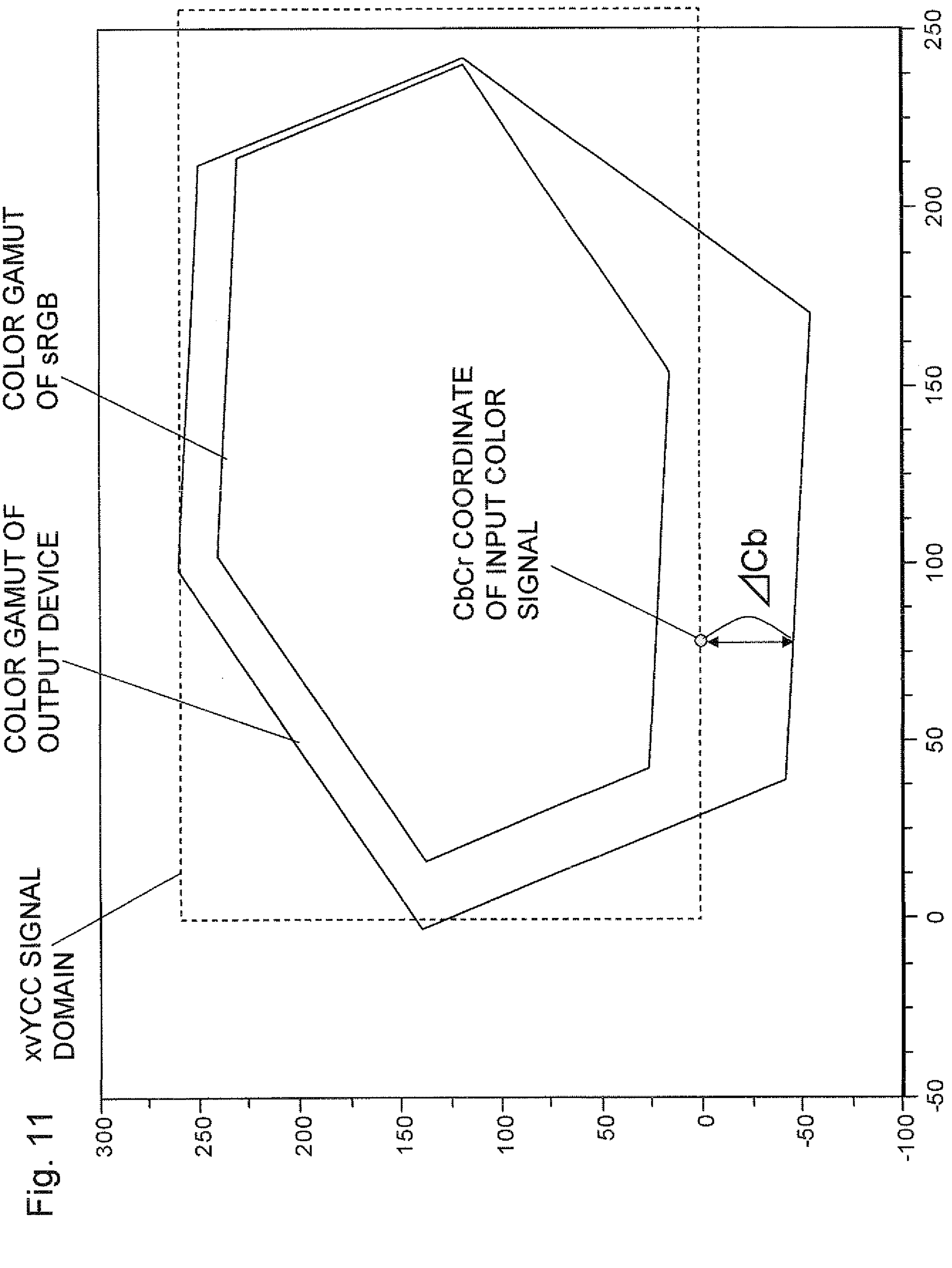
xvYCC SIGNAL DOMAIN
COLOR GAMUT OF OUTPUT DEVICE
COLOR GAMUT OF sRGB
CbCr COORDINATE OF INPUT COLOR SIGNAL
ΔCb
300
250
200
150
100
50
0
-50
-100
-50
0
50
100
150
200
250

Fig. 12A

| | I | II | III | IV | V | VI | VII | VIII | IX |
|---|---|---|---|---|---|---|---|---|---|
| 1 | 0 | 0 | ⓪ | ⓪ | ⓪ | ⓪ | 0 | 0 | 0 |
| 2 | 0 | ⓪ | ⓪ | 1 | 1 | ⓪ | ⓪ | 0 | 0 |
| 3 | ⓪ | ⓪ | 1 | 1 | 1 | 1 | ⓪ | ⓪ | 0 |
| 4 | ⓪ | 1 | 1 | 1 | 1 | 1 | 1 | ⓪ | 0 |
| 5 | ⓪ | 1 | 1 | 1 | 1 | 1 | 1 | ⓪ | 0 |
| 6 | ⓪ | ⓪ | 1 | 1 | ① | 1 | ⓪ | ⓪ | 0 |
| 7 | 0 | ⓪ | ⓪ | 1 | 1 | ⓪ | ⓪ | 0 | 0 |
| 8 | 0 | 0 | ⓪ | ⓪ | ⓪ | ⓪ | 0 | 0 | 0 |
| 9 | 0 | 0 | 0 | 0 | 0 | 0 | 0 | 0 | 0 |

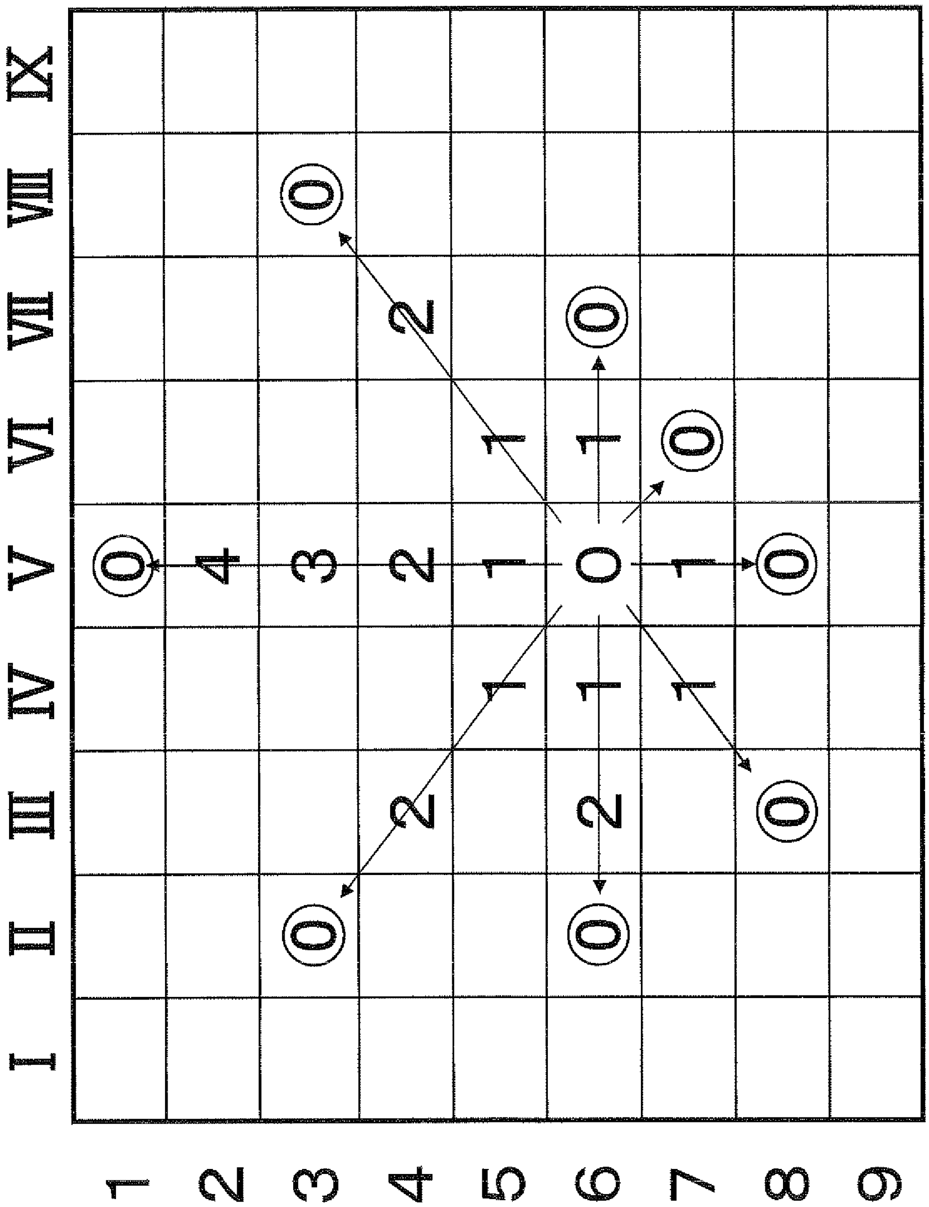


Fig. 12B

Fig.13A

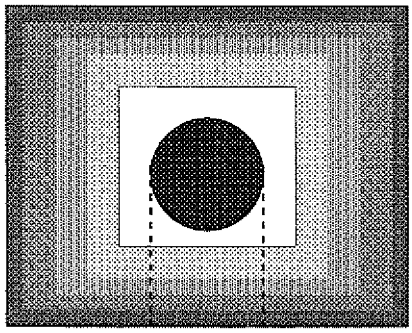

Fig.13B

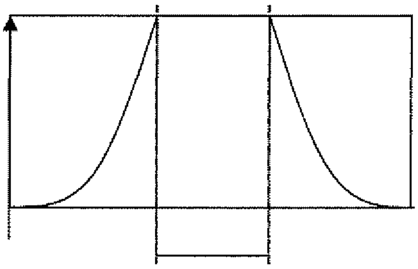

Fig.13C

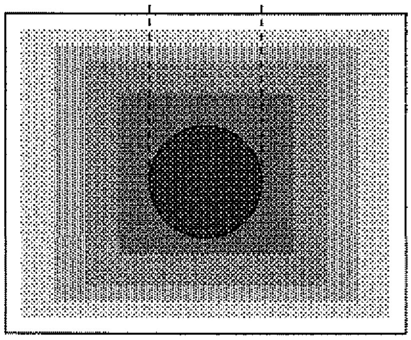

Fig. 14

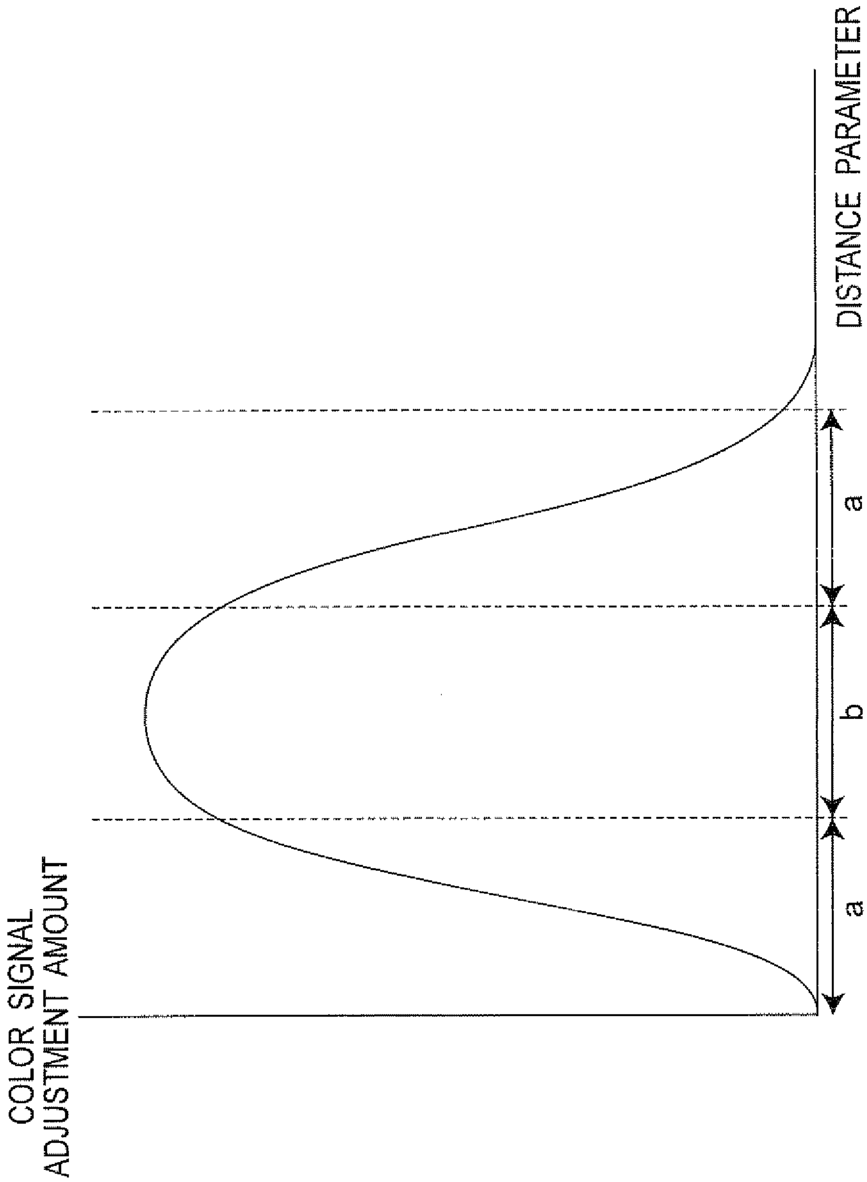

Fig.15

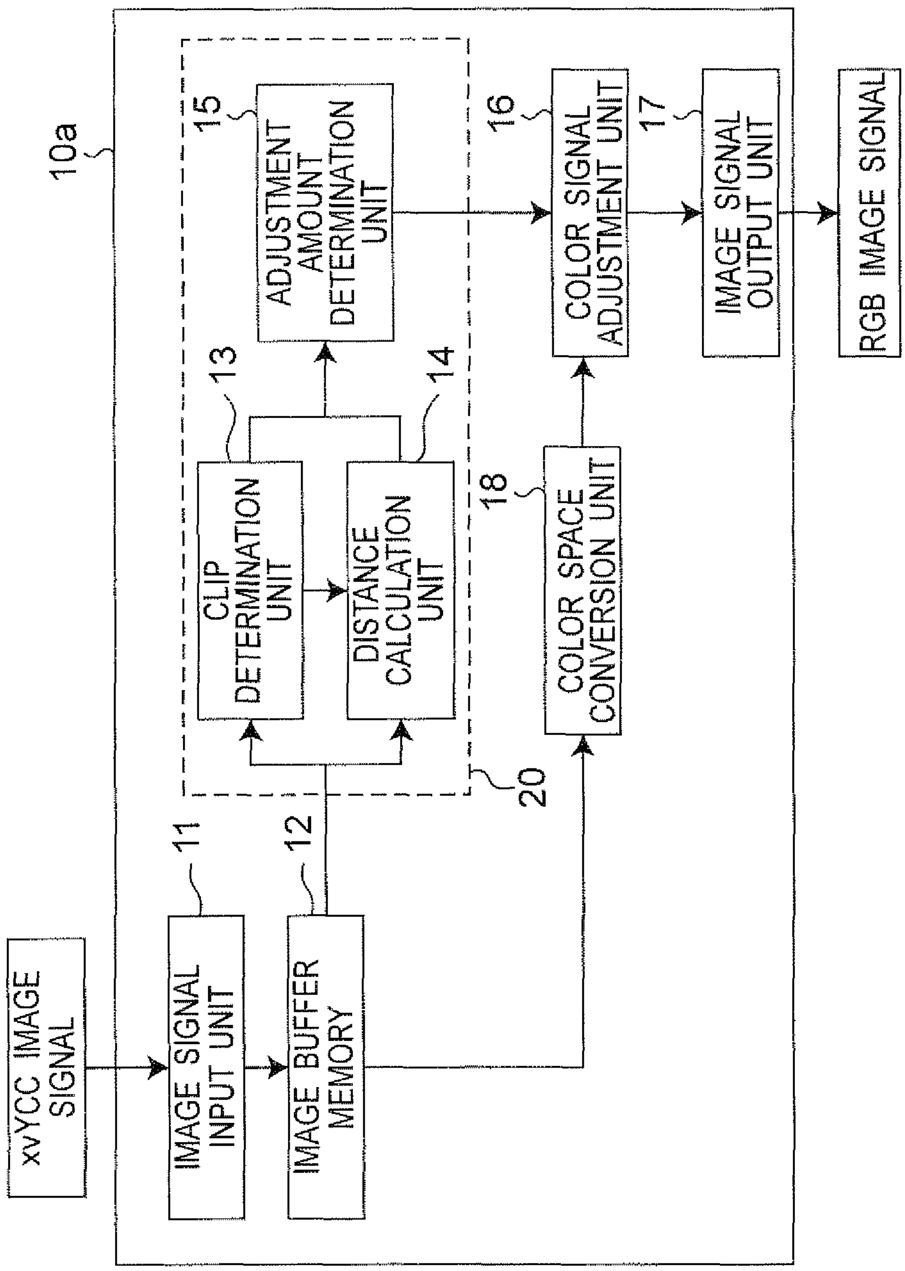
10a
xvYCC IMAGE SIGNAL
11
IMAGE SIGNAL INPUT UNIT
12
IMAGE BUFFER MEMORY
20
13
CLIP DETERMINATION UNIT
14
DISTANCE CALCULATION UNIT
15
ADJUSTMENT AMOUNT DETERMINATION UNIT
18
COLOR SPACE CONVERSION UNIT
16
COLOR SIGNAL ADJUSTMENT UNIT
17
IMAGE SIGNAL OUTPUT UNIT
RGB IMAGE SIGNAL

Fig.16

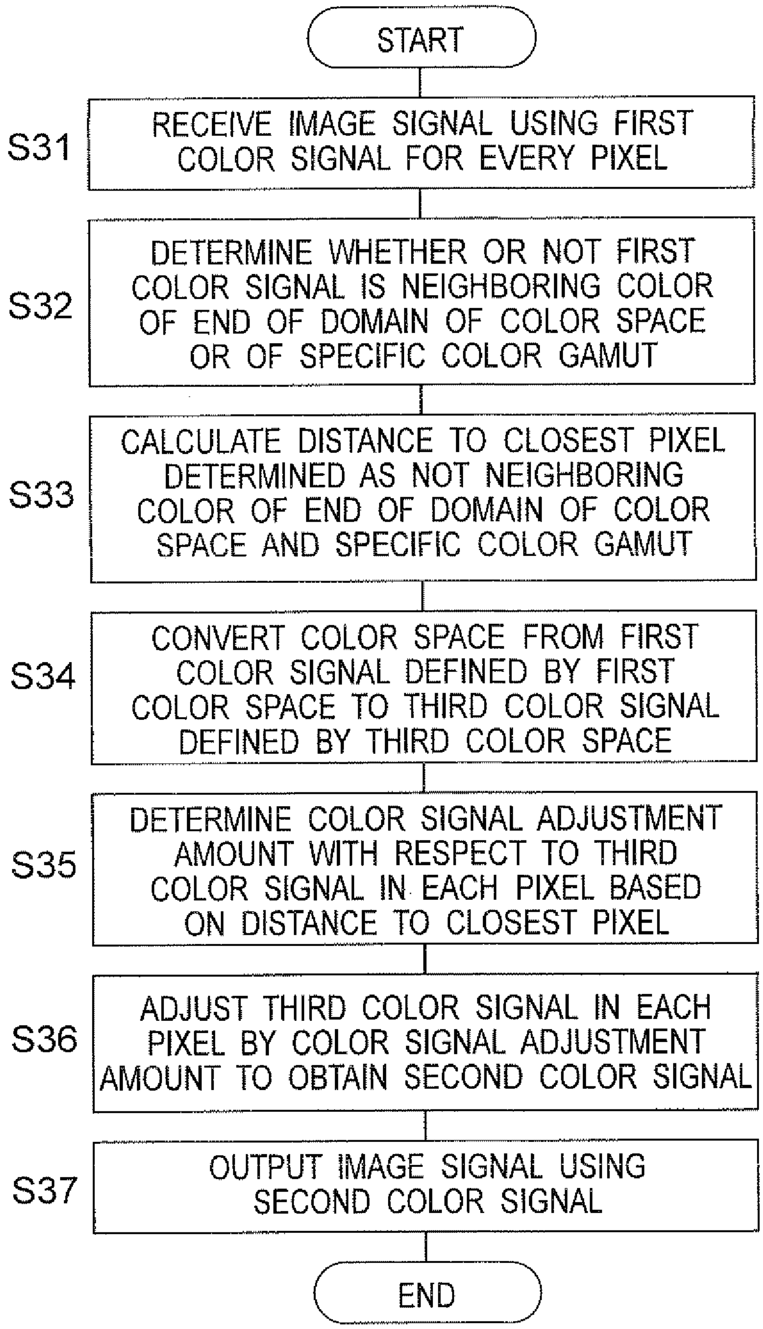
START
S31
RECEIVE IMAGE SIGNAL USING FIRST COLOR SIGNAL FOR EVERY PIXEL
S32
DETERMINE WHETHER OR NOT FIRST COLOR SIGNAL IS NEIGHBORING COLOR OF END OF DOMAIN OF COLOR SPACE OR OF SPECIFIC COLOR GAMUT
S33
CALCULATE DISTANCE TO CLOSEST PIXEL DETERMINED AS NOT NEIGHBORING COLOR OF END OF DOMAIN OF COLOR SPACE AND SPECIFIC COLOR GAMUT
S34
CONVERT COLOR SPACE FROM FIRST COLOR SIGNAL DEFINED BY FIRST COLOR SPACE TO THIRD COLOR SIGNAL DEFINED BY THIRD COLOR SPACE
S35
DETERMINE COLOR SIGNAL ADJUSTMENT AMOUNT WITH RESPECT TO THIRD COLOR SIGNAL IN EACH PIXEL BASED ON DISTANCE TO CLOSEST PIXEL
S36
ADJUST THIRD COLOR SIGNAL IN EACH PIXEL BY COLOR SIGNAL ADJUSTMENT AMOUNT TO OBTAIN SECOND COLOR SIGNAL
S37
OUTPUT IMAGE SIGNAL USING SECOND COLOR SIGNAL
END

Fig. 17

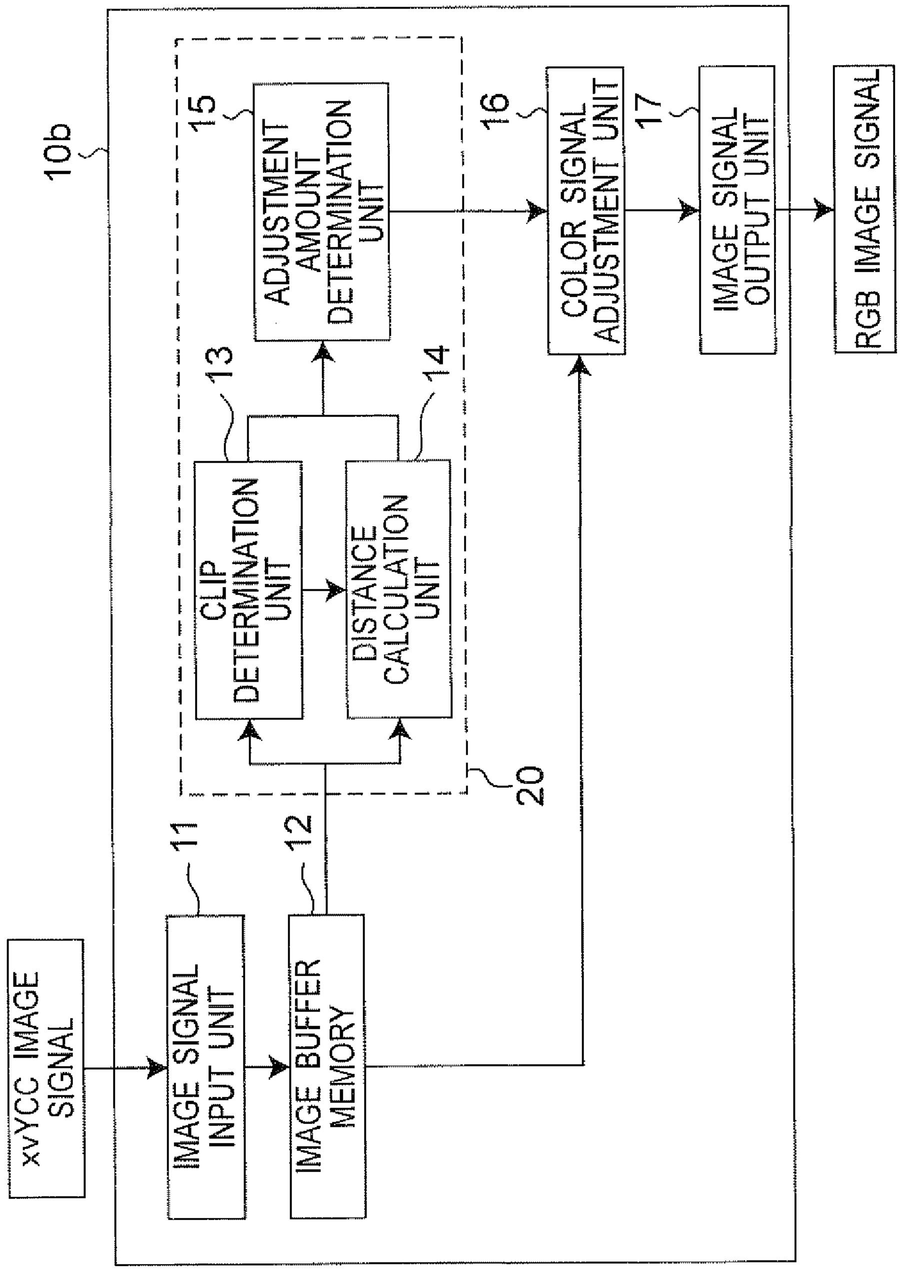
10b
xvYCC IMAGE SIGNAL
IMAGE SIGNAL INPUT UNIT
11
IMAGE BUFFER MEMORY
12
20
CLIP DETERMINATION UNIT
13
DISTANCE CALCULATION UNIT
14
ADJUSTMENT AMOUNT DETERMINATION UNIT
15
COLOR SIGNAL ADJUSTMENT UNIT
16
IMAGE SIGNAL OUTPUT UNIT
17
RGB IMAGE SIGNAL

Fig.18

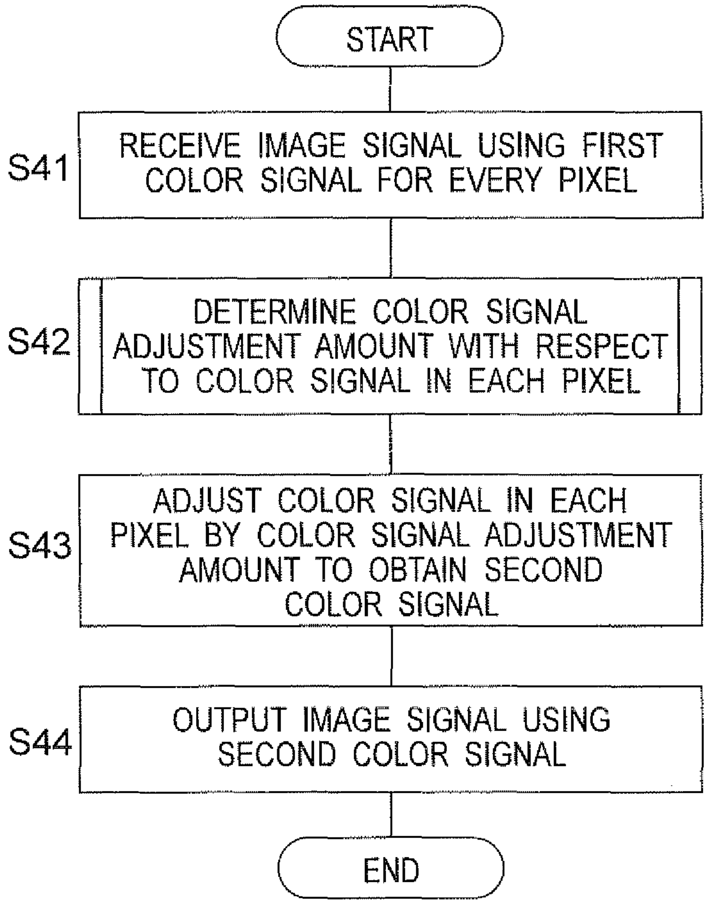
START
S41
RECEIVE IMAGE SIGNAL USING FIRST COLOR SIGNAL FOR EVERY PIXEL
S42
DETERMINE COLOR SIGNAL ADJUSTMENT AMOUNT WITH RESPECT TO COLOR SIGNAL IN EACH PIXEL
S43
ADJUST COLOR SIGNAL IN EACH PIXEL BY COLOR SIGNAL ADJUSTMENT AMOUNT TO OBTAIN SECOND COLOR SIGNAL
S44
OUTPUT IMAGE SIGNAL USING SECOND COLOR SIGNAL
END

Fig.19

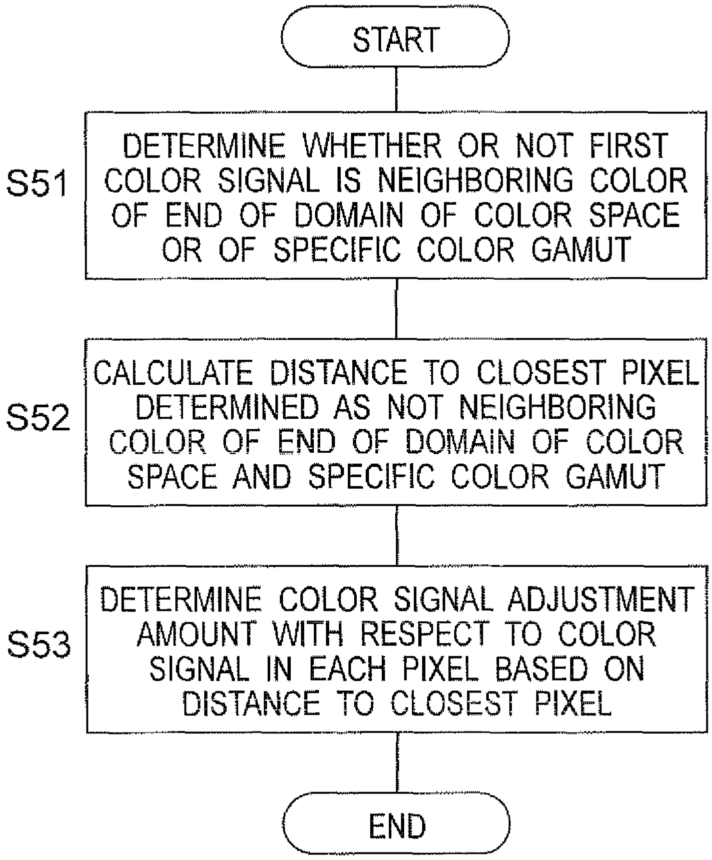
START
S51
DETERMINE WHETHER OR NOT FIRST COLOR SIGNAL IS NEIGHBORING COLOR OF END OF DOMAIN OF COLOR SPACE OR OF SPECIFIC COLOR GAMUT
S52
CALCULATE DISTANCE TO CLOSEST PIXEL DETERMINED AS NOT NEIGHBORING COLOR OF END OF DOMAIN OF COLOR SPACE AND SPECIFIC COLOR GAMUT
S53
DETERMINE COLOR SIGNAL ADJUSTMENT AMOUNT WITH RESPECT TO COLOR SIGNAL IN EACH PIXEL BASED ON DISTANCE TO CLOSEST PIXEL
END

Fig.20

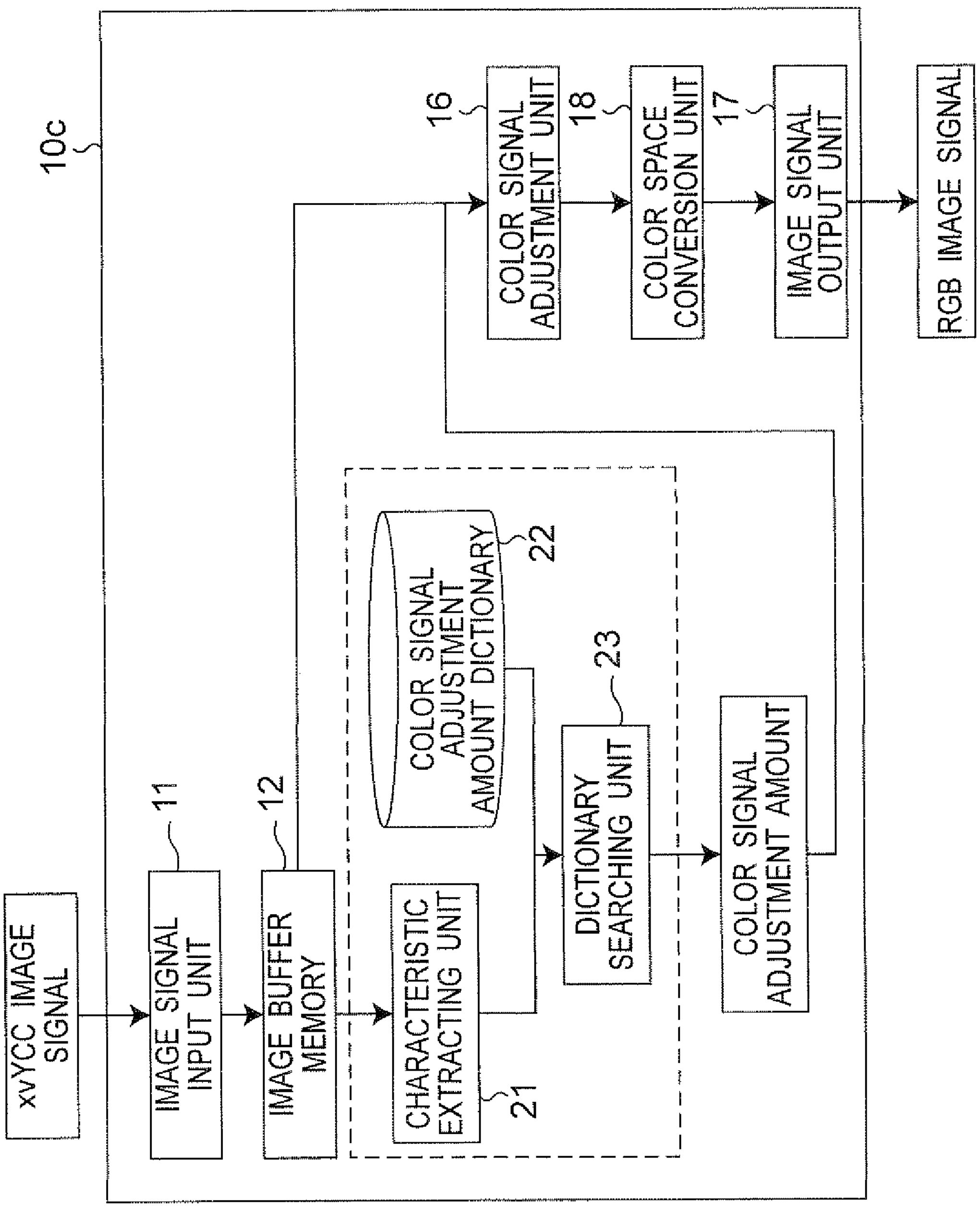
10c
xvYCC IMAGE SIGNAL
IMAGE SIGNAL INPUT UNIT
11
IMAGE BUFFER MEMORY
12
CHARACTERISTIC EXTRACTING UNIT
21
COLOR SIGNAL ADJUSTMENT AMOUNT DICTIONARY
22
DICTIONARY SEARCHING UNIT
23
COLOR SIGNAL ADJUSTMENT AMOUNT
COLOR SIGNAL ADJUSTMENT UNIT
16
COLOR SPACE CONVERSION UNIT
18
IMAGE SIGNAL OUTPUT UNIT
17
RGB IMAGE SIGNAL

Fig.21

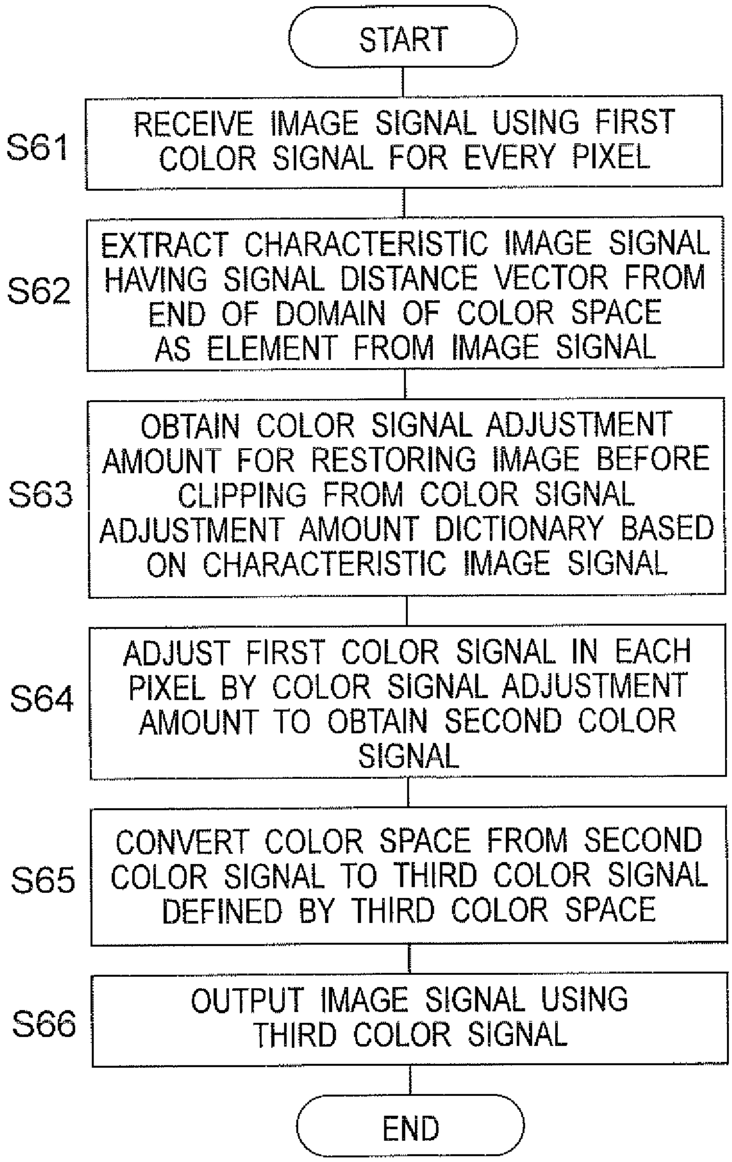
START
S61
RECEIVE IMAGE SIGNAL USING FIRST COLOR SIGNAL FOR EVERY PIXEL
S62
EXTRACT CHARACTERISTIC IMAGE SIGNAL HAVING SIGNAL DISTANCE VECTOR FROM END OF DOMAIN OF COLOR SPACE AS ELEMENT FROM IMAGE SIGNAL
S63
OBTAIN COLOR SIGNAL ADJUSTMENT AMOUNT FOR RESTORING IMAGE BEFORE CLIPPING FROM COLOR SIGNAL ADJUSTMENT AMOUNT DICTIONARY BASED ON CHARACTERISTIC IMAGE SIGNAL
S64
ADJUST FIRST COLOR SIGNAL IN EACH PIXEL BY COLOR SIGNAL ADJUSTMENT AMOUNT TO OBTAIN SECOND COLOR SIGNAL
S65
CONVERT COLOR SPACE FROM SECOND COLOR SIGNAL TO THIRD COLOR SIGNAL DEFINED BY THIRD COLOR SPACE
S66
OUTPUT IMAGE SIGNAL USING THIRD COLOR SIGNAL
END

Fig.22

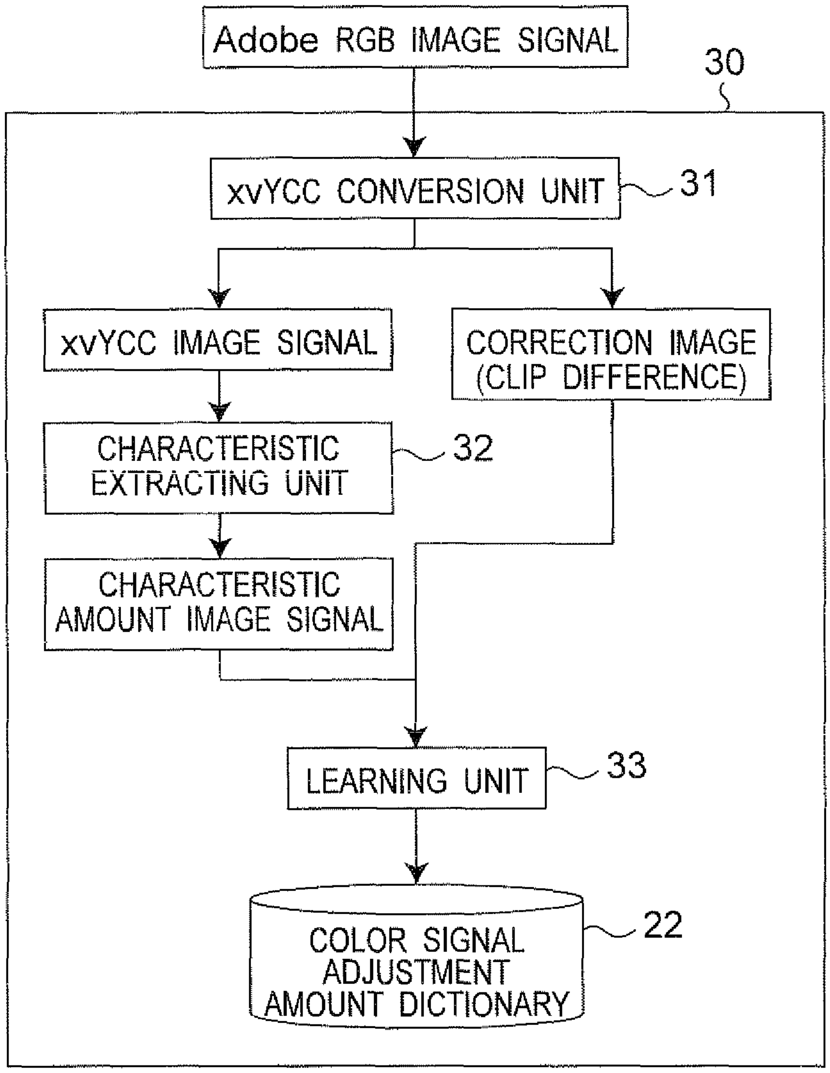
Adobe RGB IMAGE SIGNAL
30
xvYCC CONVERSION UNIT
31
xvYCC IMAGE SIGNAL
CORRECTION IMAGE (CLIP DIFFERENCE)
CHARACTERISTIC EXTRACTING UNIT
32
CHARACTERISTIC AMOUNT IMAGE SIGNAL
LEARNING UNIT
33
COLOR SIGNAL ADJUSTMENT AMOUNT DICTIONARY
22

*Fig.23*

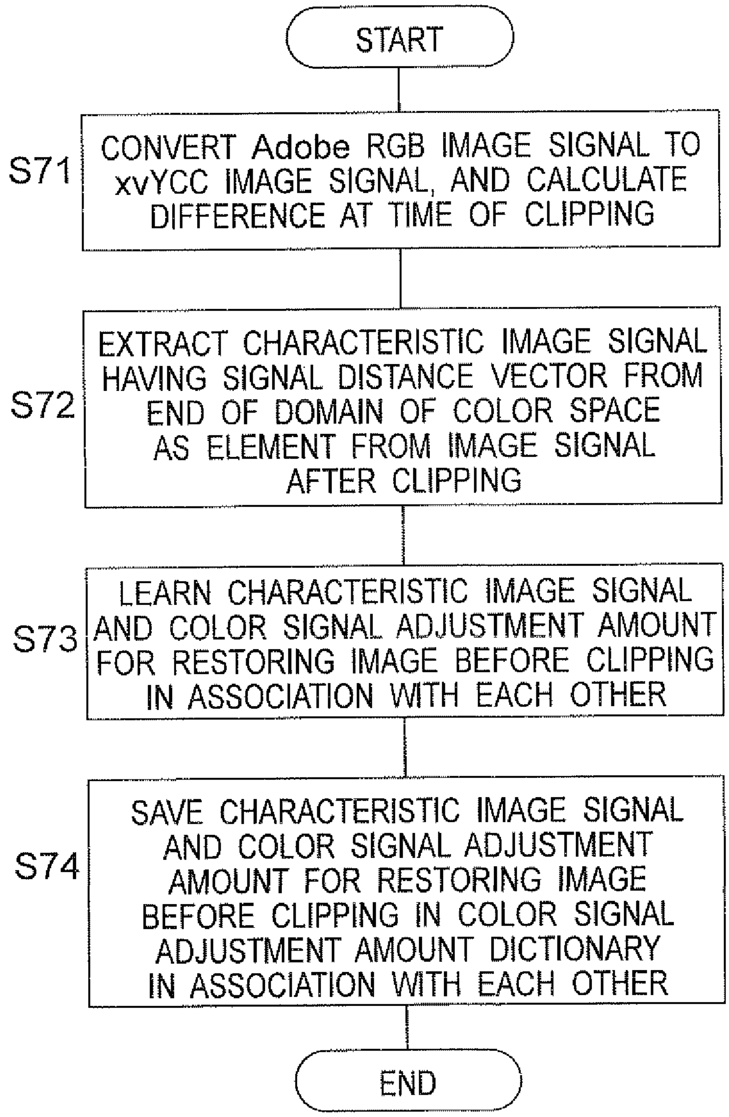
START
S71
CONVERT Adobe RGB IMAGE SIGNAL TO xvYCC IMAGE SIGNAL, AND CALCULATE DIFFERENCE AT TIME OF CLIPPING
S72
EXTRACT CHARACTERISTIC IMAGE SIGNAL HAVING SIGNAL DISTANCE VECTOR FROM END OF DOMAIN OF COLOR SPACE AS ELEMENT FROM IMAGE SIGNAL AFTER CLIPPING
S73
LEARN CHARACTERISTIC IMAGE SIGNAL AND COLOR SIGNAL ADJUSTMENT AMOUNT FOR RESTORING IMAGE BEFORE CLIPPING IN ASSOCIATION WITH EACH OTHER
S74
SAVE CHARACTERISTIC IMAGE SIGNAL AND COLOR SIGNAL ADJUSTMENT AMOUNT FOR RESTORING IMAGE BEFORE CLIPPING IN COLOR SIGNAL ADJUSTMENT AMOUNT DICTIONARY IN ASSOCIATION WITH EACH OTHER
END

## INTERNATIONAL SEARCH REPORT

International application No. PCT/JP2008/003808

A. CLASSIFICATION OF SUBJECT MATTER
*G06T1/00*(2006.01)i, *H04N1/46*(2006.01)i, *H04N1/60*(2006.01)i

According to International Patent Classification (IPC) or to both national classification and IPC

B. FIELDS SEARCHED

Minimum documentation searched (classification system followed by classification symbols)
G06T1/00, H04N1/46, H04N1/60

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-094531 A (Toshiba Tec Corp.), 06 April, 2006 (06.04.06), Par. Nos. [0001] to [0030], [0044] to [0047]; Figs. 2, 4, 5 & US 2006/0061784 A1 & CN 1753453 A | 1-16 |
| A | JP 2007-053521 A (Seiko Epson Corp.), 01 March, 2007 (01.03.07), Par. Nos. [0002] to [0006], [0077] to [0090]; Figs. 13 to 17, 23 & US 2007/0041028 A1 | 1-16 |
| A | JP 2005-284521 A (Seiko Epson Corp.), 13 October, 2005 (13.10.05), Claim 5; Par. Nos. [0003], [0040] to [0044], [0060] to [0074]; Figs. 4 to 5 (Family: none) | 1-16 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 January, 2009 (26.01.09) | 03 February, 2009 (03.02.09) |
| Name and mailing address of the ISA/ Japanese Patent Office | Authorized officer |
| Facsimile No. | Telephone No. |

Form PCT/ISA/210 (second sheet) (April 2007)

INTERNATIONAL SEARCH REPORT

International application No.
PCT/JP2008/003808

Claims 1 and 10 define the inventions specified by the matter that "the distance between the pixel whose first chrominance signal is judged to be a chrominance signal at the edge of a definition gamut of the color space or a neighboring color at the edge of the specific color gamut and a closest neighboring pixel whose first chrominance signal is judged to be not a chrominance signal at the edge of the definition gamut of the color space nor a neighboring color at the edge of the specific color gamut is calculated". Since whether the "distance" indicates a distance in the color space or a distance on the image plane is unclear, claims 1 and 10 are lacking the requirement of clarity within the meaning of PCT Article 6.

Therefore, the search has been conducted assuming that the distance from the boundary on the image plane is "the distance" as specified in the description (paragraph [0048]).

Claims 9 and 16 define the inventions specified by a parameter, that is, "a signal distance vector from the edge of the definition gamut in the color space. However, "the signal distance vector" is not a parameter generally used in the relevant technical field. Since even if the technical common knowledge on the filing date is taken into consideration, "the signal distance vector" cannot be specified, claims 9 and 16 are lacking the requirement of clarity within the meaning of PCT Article 6.

Consequently, the search has been conducted assuming that with respect to the xvYCC color signal of each pixel, the signal distances Db, Dr between the edge of the definition gamut in the xvYCC color gamut and the pixels Cb, Cr within a predetermined distance range are "the signal distance vectors" as specified in the description (paragraph [0066]).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008013746 A
- JP 3800427 B
- JP 2006033246 A
- JP 2003153027 A